# EUROPEAN PATENT SPECIFICATION

(11) **EP 4 161 784 B1**
(45) Date of publication and mention of the grant of the patent: **04.12.2024**
(21) Application number: 21817882.0
(22) Date of filing: 31.05.2021
(51) Int. Cl.: B60B 5/02, B29C 70/06, B29C 70/30, B29C 70/44, B29L 31/32

(54) **IMPROVED CARBON FIBRE WHEEL EXTERNAL FACE**
VERBESSERTE AUSSENFLÄCHE FÜR KOHLENSTOFFFASERRAD
FACE EXTERNE DE ROUE EN FIBRES DE CARBONE AMÉLIORÉE

(30) Priority: 04.06.2020 AU 2020901840
(43) Date of publication of application: 12.04.2023
(73) Proprietor: CARBON REVOLUTION PTY LTD, Waurn Ponds, Victoria 3216 (AU)
(72) Inventor: LAW, Haydn, Fremantle, Western Australia 6158 (AU); AGIUS, Steven, Belmont, Victoria 3216 (AU); DENMEAD, Ashley, James, Belmont, Victoria 3216 (AU); DINGLE, Matthew, Edward, Drysdale, Victoria 3222 (AU)
(74) Representative: Hoffmann Eitle
(86) International application number: PCT/AU2021/050532
(87) International publication number: WO 2021/243400

(56) References cited:
- WO-A1-2018/178472
- AU-A4- 2012 101 896
- CN-A- 106 985 421
- US-A- 4 017 348
- US-A- 4 721 342
- US-A- 5 143 426
- US-A1- 2017 087 929
- US-B2- 9 840 110

## Description

### PRIORITY CROSS-REFERENCE

The present application claim priority from Australian Provisional Patent Application No. 2020901840 filed with the Australian Patent Office on 4 June 2020.

### TECHNICAL FIELD

The present invention generally relates to a carbon fibre wheel having an aesthetically improved outer or external face. The invention is particularly applicable to composite carbon fibre wheels for vehicles and it will be convenient to hereinafter disclose the invention in relation to that exemplary application. However, it is to be appreciated that the invention is not limited to that application and could be used as a production aid in a large variety of composite type wheels.

### BACKGROUND OF THE INVENTION

The following discussion of the background to the invention is intended to facilitate an understanding of the invention. However, it should be appreciated that the discussion is not an acknowledgement or admission that any of the material referred to was published, known or part of the common general knowledge as at the priority date of the application.

The Applicant has produced a one-piece composite wheel, which is described, for example in International Patent Publication WO2010/025495A1 and International Patent Publication No. WO2019/033169A1. The creation of a one-piece composite wheel generally necessitates use of a separate rim portion mould and associated reinforcement and face portion mould and associated reinforcement. The separate rim and face mould portions are then interconnected in a final assembly and moulding process which allows the overall composite wheel to be integrally formed. A final moulding process is then undertaken in which matrix material, such as a resin, is injected and/or infused into the reinforcement of the overall wheel form to produce a moulded single piece wheel.

A variety of resins can be injected into the reinforcement of the overall wheel form to produce a moulded single piece wheel. In conventional carbon fibre wheels, a structural resin, typically an epoxy resin, has generally been used that provides a conventional mostly translucent colour once cured. When combining this translucent resin with black carbon fibre the material takes on a black appearance. This black cured colour is considered to be the aesthetically desirable and expected appearance and colour of a carbon fibre product.

The Applicant has found that carbon fibre wheels used in some applications, for example high performance cars, may require greater thermal resistant properties and performance compared to standard resin-based wheels due to high temperature loadings from proximate braking arrangements.

Carbon fibre parts including vehicle wheels have been previously modified by applying a thermal barrier coating onto sections of the part subjected to high temperatures (see for example international patent publication No. WO2016168899). This allows the part to be constructed from a lower thermal performing but aesthetically acceptable structural resin. However, the application of a thermal barrier coating inevitably covers sections of the wheel with a coloured coating and can add considerable cost. This can detract from the desired aesthetics and economics of the wheel.

Another solution is to use an alternate type of material that has better thermal properties, such as a high thermal performance structural resin or other thermal performance additives during the moulding process. However, the resulting product can have an aesthetically unacceptable appearance. For example, a number of high thermal performance structural resins cure with a non-black, in some cases dark brown colour, which does not provide the desirable and accepted black carbon fibre appearance required for a high value saleable product.

Additionally, the Applicant has found that current resin transfer moulding processes generally introduce at least some surface defects into the external surface of a moulded composite wheel. Aesthetic defects that result from the current wheel manufacturing process result in a quality cost to rectify. In some cases, not all of these aesthetic defects can be rectified after moulding and prior to clear coat or other painting process. Certain surface defects may therefore cause product rejection, providing an undesirably high discard cost.

It would therefore be desirable to provide a new or improved carbon fibre wheel arrangement that can solve or at least ameliorate one or more of the above issues.

### SUMMARY OF THE INVENTION

The present invention provides a new carbon fibre wheel arrangement consisting of a carbon fibre wheel body (structural wheel) which includes a carbon fibre fascia layer designed to cover at least a portion of the external face portion of that carbon fibre wheel body.

The present invention provides in a first aspect, a carbon fibre wheel for a vehicle, the carbon fibre wheel comprising:
a wheel body comprising a rim portion and a face portion, the rim portion comprises an annulus structure configured to receive and seat a tyre, the face portion including a hub configured to fix the wheel to the vehicle, and a connection structure that extends between and interconnects the hub and the rim, the wheel body having an inner side configured to face a wheel mount of a vehicle, and an outer side configured to face outwardly when connected to a wheel mount of a vehicle, the wheel body being formed from a first carbon fibre composite composition comprising a carbon fibre layup infused with a first resin; and
a fascia layer attached to at least a portion of the face portion of the outer side of the wheel body, the fascia layer being formed from a second fibre composite composition comprising a selected fibre layup infused with a second resin.

The use of a fascia layer advantageously provides an improved surface finish compared to the surface of a bulk moulded carbon fibre wheel. The fascia layer comprises a much smaller, thinner layer (compared to the bulk wheel) of which the surface quality and finish can be controlled more easily. The use of a fascia layer therefore enables any aesthetic defects on the outer side of the wheel body moulding to be completely covered. The fascia layer is preferably designed to satisfy all aesthetic, structural, environmental and performance requirements of this outer layer of the carbon fibre wheel.

Where the carbon fibre wheel is moulded as a single piece, any defects in the external or outer face need to be rectified, adding a rectification cost. Certain defects may cause product rejection, providing a high discard cost. In comparison, the cost of adding a fascia layer to a preformed wheel body is significantly less than moulding and production of a full carbon fibre wheel and rectifying any surface defects on the external surface of the full carbon fibre wheel. Generally, any surface finish defects in the structural wheel moulding will not require rectification because an adhesive and/or the facia material itself will fill the defect during the step of attaching of the fascia layer over the outer side of the wheel body. The fascia layer thus overlays onto the outer surface of the wheel body to complete the carbon fibre wheel with an aesthetically pleasing external finish. The use of a fascia layer can therefore provide cost efficiencies in quality inspection and part rejection associated with external surface finish defects.

The first resin of the wheel body and the second resin of the fascia layer can include any suitable resin. The first resin and second resin are preferably based on unsaturated polyester, polyurethane, polyvinyl ester, epoxy, thermosets, thermoplastics, or combinations thereof. In some embodiments, the first resin and the second resin can have the same or similar compositions. Here the fascia resin can have the same resin as used in the structural wheel moulding. In other embodiments, the first resin has a different composition to the second resin.

The first resin is preferably selected as a structural resin. This resin can be selected as a resin that includes one or more of the following properties: high toughness, cost effective resin, high elongation to failure resin, high thermal performance resin, or short cure cycle time resin. The first resin can include desired mechanical properties for a particular application.

In some embodiments, at least the second resin has an aesthetically acceptable cured colour. It is to be understood that aesthetically acceptable cured colour means a colour considered to provide the carbon fibre wheel with an aesthetically desirable and expected appearance and colour. This generally requires the carbon fibre wheel to have a cured resin that allows the fibre to be visible showing the colour of that fibre - for example for carbon fibre the black or close to black colour and appearance of that carbon fibre would be visible through that resin. It should be appreciated that the colour "black" can have various black shades ranging to jet black to off-black colours. The term "black" used herein is intended to include those various shades of black associated with carbon fibre composites. In embodiments, the aesthetically acceptable cured colour of the second resin is substantially clear or transparent. The cured second resin may also be at least one of translucent, glassy or pellucid in some forms. Thus, for carbon fibre composites, the combination of a clear, transparent, translucent or the like (as above) resin with black carbon fibre results in the material taking on an aesthetically desirable black appearance.

Whilst the fibre colour of many carbon fibre components (fibres, carbon fibre layup, collected fibre parts and the like) is conventionally black, it should be appreciated that in some embodiments, the fibre portion of the fascia layer can have any desired colour depending on the fibre or mixture of fibres selected to make up the selected fibre layup of the fascia layer. Similarly, the resin colour of the fascia layer can be selected to have any particular desired colour. Embodiments of the present invention can therefore have a fascia layer comprising resin, selected fibre or mixture of fibres and/or other fibre layup having any particular desired colour.

The selected fibre layup of the second fibre composition of the facia layer can comprise one or more fibres (for example, a single fibre or a mixture of two or more fibres) that are desired to provide a specific colour and pattern in the layup which is visible through the cured resin. It should be appreciated that the selected fibre layup can have any desired pattern, design or aesthetics formed from the fibre layup and any additional elements added to that layer. In order to form that design, the selected fibre layup can be formed from fibres selected from the group consisting of carbon fibres, glass fibres, aluminised glass fibres, aramid fibres, synthetic fibres such as acrylic, polyester, PAN, PET, PE, PP or PBO-fibres, or the like, bio fibres such as hemp, jute, cellulose fibres or the like, mineral fibres for example Rockwool or the like, metal fibres for example steel, aluminium, brass, copper, or the like, boron fibres or any combination of these. In embodiments, the selected fibre layup is preferably formed from one or more fibres selected from carbon fibre, aramid fibre or para-aramid fibre (for example Kevlar), glass fibre, polyester fibre, aluminised glass fibres or the like. Those fibres could be coloured so the selected fibre layup may include one or more fibres selected from coloured glass fibres, coloured polyester fibres, coloured carbon fibres or the like. In some embodiments, the selected fibre layup comprises carbon fibres with an amount of additional different fibres to provide a decorative element. However, in many embodiments, the selected fibre layup comprises carbon fibres or at least substantially comprise carbon fibres. In embodiments, the fascia layer is formed from a second fibre composite composition comprising a carbon fibre layup infused with the second resin. In these embodiments, the fascia layer is typically laid up to look like the decorative outer layer of a carbon fibre part having the distinctive and aesthetically desirable black appearance and regular carbon fibre layup patterning.

In embodiments, the first resin comprises a thermal performance structural resin, preferably a high thermal performance structural resin. The thermal performance structural resin is preferably selected from at least one of resins comprising epoxys, bismaleimides, polyimides, benzoxazines, phenolics, cyanate esters, polyurethane, polyester or other thermoset materials. The second resin can comprise of any structural resin having an aesthetically acceptable cured colour. The second resin is preferably selected from at least one of epoxy, polyurethane, polyester, or vinylester based resins. In particular embodiments, the second resin comprises a polyurethane based resin, preferably a clear polyurethane-based resin. In a number of embodiments, the second resin comprises a UV resistant resin.

Where a high thermal performance structural resin is used, the present invention is able to provide an aesthetically acceptable carbon fibre wheel with high thermal performance. The high thermal performance is provided by the base carbon fibre wheel body formed from high thermal performance resin, whilst the aesthetically acceptable carbon fibre appearance is provided by the external fascia which covers the external surfaces (outwardly facing front face) of the face portion and rim portion of the carbon fibre wheel.

Where the second resin comprises a polyurethane based resin, the moulded surface can in some embodiments be produced with a desired surface finish affected by tooling surface design, for example high gloss, semi-gloss, matt, textured etc. using the desired textured or polished surface in the moulding process. A polyurethane based resin also provides the ability to achieve a variety of non-clear finishes by adding pigment/colours to the fascia resin, for example a tinted finish. The use of a polyurethane based resin can also enable the application of self-healing functionality via polyurethane clear coatings to the face portion and other portions of the wheel body. Polyurethane resin does not require a protective coating, applied for example by spray painting. Epoxy resin requires a protective coating to protect the epoxy. Thus, no additional protective coating or other surface finish such as spray-painting is required. Polyurethane resin is also inherently clearer than epoxy resin, and thus provides aesthetic advantages over other types of resins that could be used for the fascia layer.

The fascia layer can have a variety of forms:

In a first embodiment, the fascia layer comprises a moulded fibre composite layer that is adhered to the wheel body, preferably adhered to the wheel body using an adhesive. In this embodiment, the fascia layer is preferably produced as a separate moulded fibre composite layer component, typically as a resin transfer moulded (RTM) component, which is then attached onto the face portion and optionally at least portion of the rim portion of the outer side of the wheel body. The use of a moulded fibre composite layer component advantageously provides an improved surface finish compared to the surface of a bulk moulded carbon fibre wheel. The moulded fibre composite layer comprises a much smaller, thinner moulded part compared to the bulk wheel of which the surface quality and finish can be controlled more easily. The use of a moulded fibre composite layer therefore enables any aesthetic defects on the outer side of the wheel body moulding to be completely covered. The fascia layer is preferably designed to satisfy all aesthetic, structural, and environmental performance requirements of the carbon fibre wheel.

The fascia layer (moulded fibre composite layer embodiment) can be attached to the wheel body in a permanent or in a replaceable/ removable manner. In some embodiments, the fascia layer is fixedly attached to the wheel body. This can be achieved through various means including adhesive, moulding, melting, mechanical or other integral attachment methods or means. In a preferred form, an adhesive is used to bond the moulded fibre composite layer to the wheel body. Here the carbon fibre wheel further comprises an adhesive between the wheel body and facia layer which attaches the fascia layer to the wheel body. A variety of adhesives can be used, for example at least one of epoxy, polyurethane, methacrylate or similar adhesive.

The adhesive is preferably selected to be able to flow between the outer side of the wheel body and an inner surface of the fascia layer to fill any gaps, recesses or cavities therebetween. It can be more cost effective to fill between the wheel body and the fascia layer using an adhesive than it is to use a fibrous structural material. The adhesive therefore preferably further comprises a filler material located in any cavity, gap or recess between the outer side of the wheel body and an inner surface of the fascia layer. The adhesive is present in an amount that preferably completely fills the space between the wheel body and fascia layer. It should be appreciated however that in some forms, an alternative, lower cost filler material could substitute some of the adhesive used in filling the cavity, gaps or recesses therebetween.

To assist in attachment, the outer side of the wheel body may include at least one recess or contour configured to cooperatively engage with the fascia layer. The recess or contour is preferably designed to receive adhesive and allow that adhesive to flow between the outer side of the wheel body and an inner surface of the fascia layer.

The fascia layer of this first embodiment comprises a thin moulded face plate designed to cover the outer side of the wheel body. The fascia layer is not intended to provide any significant structural or mechanical properties to the overall wheel. Though it should be noted that the fascia layer may be highly stressed in use, so may provide some mechanical integrity to the system. The wheel body is intended to provide the structural properties of the carbon fibre wheel. The fascia layer is therefore preferably constructed with a wall/ layer thickness of 0.1 to 10 mm, more preferably 0.2 to 10 mm. In some embodiments, the wall thickness of the fascia layer is between 0.1 to 15 mm, more preferably 0.5 to 10 mm. In other embodiments, the wall thickness of the fascia layer is between 1 to 8 mm, more preferably 2 to 6 mm. In yet other embodiments, the wall thickness of the fascia layer is between 0.1 to 2 mm, more preferably 0.2 to 1 mm. In exemplary embodiments, the wall thickness of the fascia layer is between 1 to 2.5 mm. In embodiments, the wall thickness of the fascia layer is at least 1/20 the thickness/ depth of the wheel body, more preferably at least 1/30 the thickness/ depth of the wheel body. In embodiments, the wall thickness of the fascia layer is between 1/20 and 1/500 the thickness/ depth of the wheel body, for example in some parts 1/250 the thickness/ depth of the wheel body.

The adhesive that is used to bond the moulded fascia to the moulded wheel range preferably has a thickness of 50 to 400 microns, in some embodiments from 100 to 300 microns, more preferably around 200 microns.

The fascia layer is preferably configured with a shaped and contoured outer face. In embodiments, the fascia layer (and the outer face thereof) is configured with a more complex geometry than the outer surface of the wheel body, for example design features for improved aesthetics. The present invention can therefore enable the wheel body to be designed with simpler outer side geometry. The fascia layer can then be moulded with shapes and contours of a desired or designed wheel configuration. Any defects in the face of the outer side of the wheel body are covered by the fascia layer, concealing that aesthetically unacceptable surface with the designed fascia layer.

The fascia layer is preferably configured and attached/ bonded onto the wheel body in a manner that is not obviously a secondarily bonded part. This can be achieved by configuring the fascia layer to substantially extend over the entire outer side of the wheel body, and preferably is configured to cover and conceal over the entire surface of the face portion and at the rim portion of the outer side of the wheel body.

In a second embodiment, the fascia layer comprises a fibre composite layer that is moulded onto the wheel body. That moulding process can comprise any suitable process steps. In exemplary embodiments, the fascia layer comprises an overmoulded fibre composite layer, for example an overmoulded carbon fibre composite layer. This overmoulding process preferably comprises a resin transfer moulded (RTM) layer.

Similar to the first embodiment, this form of the fascia layer comprises a thin moulded layer designed to cover at least a portion of the outer side of the wheel body. The fascia layer is not intended to provide any significant structural or mechanical properties to the overall wheel. The wheel body is intended to provide the structural properties of the carbon fibre wheel. The fascia layer is therefore preferably constructed with a wall/ layer thickness of 100 to 800 microns, preferably 150 to 800 microns, more preferably 200 to 600 microns. In some embodiments, the wall thickness of the fascia layer is 200 to 450 microns. In some embodiments, the wall thickness of the fascia layer is 200 to 750 microns. In particular embodiments, the wall thickness of the fascia layer is 200 microns to 2 mm. Thicker fascia layers could result from using thicker layup material such as fiber mat material. In embodiments, the wall thickness of the fascia layer is at least 1/20 the thickness/ depth of the wheel body, more preferably at least 1/30 the thickness/ depth of the wheel body. In embodiments, the wall thickness of the fascia layer is between 1/20 and 1/500 the thickness/ depth of the wheel body, for example in some parts 1/250 the thickness/ depth of the wheel body.

The fascia layer is preferably configured with a shaped and contoured outer face. In embodiments, the fascia layer (and the outer face thereof) is configured with a more complex geometry than the outer surface of the wheel body, for example design features for improved aesthetics. The present invention can therefore enable the wheel body to be designed with simpler outer side geometry. The fascia layer can then be moulded with shapes and contours of a desired or designed wheel configuration. Any defects in the face of the outer side of the wheel body are covered by the fascia layer, concealing that aesthetically unacceptable surface with the designed fascia layer. In embodiments, at least one solid insert can be adhered to the outer surface of the wheel body to provide a contour or feature under the facia layer. That solid insert can comprise any suitable compatible material, for example a filler composition such as glass microsphere filled epoxy resin body or a thixotropic filled epoxy resin body.

The fascia layer is preferably attached to at least one of: the face portion of the outer side of the wheel body; or at least part of the rim portion of the outer side of the wheel body. In preferred embodiments, the fascia layer is attached to/over at least the face portion of the outer side of the wheel body. In this respect, the fascia layer is more preferably configured to cover and conceal over at least the entire surface of the face portion of the outer side of the wheel body. However, in embodiments the fascia layer may also be attached to at least part of the rim portion of the outer side of the wheel body. Thus, in some embodiments, the fascia layer is configured to cover and conceal over the entire surface of the face portion and a part of the rim portion of the outer side of the wheel body. In other embodiments, the fascia layer is configured to cover and conceal over just a part of the rim portion of the outer side of the wheel body.

The fascia layer of the various embodiments is generally configured to have at least some general geometric cooperation with the wheel body, and more particularly the outer side of the wheel body. In embodiments, the inner side of the fascia layer is moulded with a geometry that cooperates, preferably is generally complementary to the geometry of the outer side of the wheel body. The general contours of the fascia layer and wheel body (and more particularly the inner side of the fascia layer and outer side of the wheel body) are preferably designed to cooperate to assist attachment of the two portions together. The fascia layer is therefore preferably configured with cooperating configuration to the face portion and rim portion of the outer side of the wheel body, and preferably with cooperating contours of the connection section, hub section and rim portion of the wheel body.

In embodiments, the hub of the wheel body is generally circular in shape about a central axis and includes at least one recess. The fascia layer is therefore preferably configured with a cooperating shape and recesses. The hub may include three or more recesses spaced apart about the central axis, and in some cases at least four recesses spaced apart about the central axis. The fascia layer is configured with a similar cooperating configuration. Similarly, where the hub includes a central aperture, the fascia layer is configured with a cooperating central aperture. In some embodiments, this central aperture includes a step forming a rim or flange at one end of the aperture. The fascia layer is configured with a cooperating shape.

The fascia layer also preferably includes at least one aperture through which the wheel mounting arrangements, including fastening bolts (center bolt or plurality of wheel mounting bolts) are inserted. In preferred embodiments, these apertures are configured to cooperate and receive the corresponding sections of the wheel attachment arrangements taught in the Applicant's international patent publications WO2013/000009 and WO2015/027271.

The connection structure of the wheel body can in some embodiments comprise a series of annularly spaced apart spokes. In such embodiments, the fascia layer may include a cooperating series of annularly spaced apart spokes. Similarly, the spokes may comprise an elongate body which tapers or slopes inwardly from the hub towards the rim portion. In these embodiments, the fascia layer is configured with a cooperating shape.

The wheel/ wheel body may include further portions which are covered or coated with another applied layer. In some embodiments, the rim portion of the moulded wheel body includes an inner circumferential surface, and that inner circumferential surface includes a resin cover layer comprising the second resin and has a cooperating configuration with the inner circumferential surface of the wheel body. It should be appreciated that the inner circumferential surface of the rim portion preferably comprises an inner barrel surface located around and configured to face a wheel mount of a vehicle. The inner barrel surface comprises an inner annular surface of the rim forming the inner annular wall of the rim portion of the wheel body. The resin cover layer preferably has a thickness of 100 to 800 microns, and preferably 200 to 500 microns, and more preferably less than 500 microns. In some embodiments, the resin cover layer has a thickness of 5 to 500 microns, more preferably 10 to 400 microns. In some embodiments, the resin cover layer has a thickness of 10 to 500 microns, more preferably 10 to 100 microns. When the second resin comprises polyurethane, this embodiment can provide a finished clear coated glossy surface on the main visible surfaces of the composite wheel (i.e. fascia surface and inner barrel surface covered by resin cover layer) when that wheel is mounted on a wheel mount of a vehicle.

The fascia layer and shaped body can be formed by various resin based moulding systems known in the art. One preferred system is resin transfer moulding (RTM). In embodiments, the fascia layer and/or the wheel body comprises a resin transfer moulded (RTM) parts.

The fibre reinforcement of the wheel body and fascia layer can be formed from at least one of: fibre layers, fibre plies, prepregs, semi-pregs, woven or non-woven fabrics, mats, preforms, pre-consolidated pre-forms, individual or groups of fibres, tows, or tow-pregs.

It is to be understood that prepreg refers to a substantially or fully impregnated collection of fibres, fibre tows, woven or non-woven fabric or the like. Similarly, it is to be understood that semi-preg refers to a partially impregnated collection of fibres or fibre tows. The partial impregnation provides for enhanced removal of gas through or along the dry fibres during consolidation and/or curing. An example of a semi-preg is a partially impregnated layer of fibres.

It is to be understood that dry carbon fibre reinforcements (including tow based structures and woven and non-woven fabrics) are collections of individual fibres or fibre tows which are substantially dry, i.e. not impregnated by a matrix material, such as resin. It should also be understood that fibre tows are bundles of a large number of individual fibres, for example 1000's, 10000's or 100000's of fibres. Tow-pregs are at least partially impregnated fibre tows.

The carbon fibres may be provided in any desirable orientation in the transition zone like for example unidirectional, biaxial or random or a combination of these. However, the fibres are preferably oriented to reduce the stress between the composite members as well as to strengthen areas of the final structure which will be exposed to a higher stress during service. The orientation of fibres may or may not be the same in all the layers comprising fibres within the transition zone. For example, one or more layers of fibres may be oriented in another manner than other layers, if a stress analysis suggests a multi-axial fibre orientation. However, in other embodiments the fibres may be oriented substantially the same way in all the layers of fibres.

In embodiments, the fascia layer may comprise at least one fibre layer laid over the face portion and optionally a section of the rim portion of the outer side of the wheel body. In some embodiments, the fascia layer comprises a carbon fibre ply of 150 to 300 gsm, preferably a carbon fibre ply of 200 to 250 gsm. Various forms of ply can be used, for example a plain weave ply or a twill weave ply.

A second aspect of the present invention provides a method of forming a carbon fibre wheel, comprising:
forming a moulded wheel body from a first carbon fibre composite composition comprising a first carbon fibre layup infused with a first resin, the moulded wheel body comprising a rim portion and a face portion, the rim portion comprising an annulus structure configured to receive and seat a tyre, the face portion including a hub configured to fix the wheel to the vehicle, and a connection structure that extends between and interconnects the hub and the rim, the wheel body having an inner side configured to face a wheel mount of a vehicle, and an outer side configured to face outwardly when connected to a wheel mount of a vehicle;
forming a facia layer on the outer side of the moulded wheel body from a second fibre composite composition comprising a selected fibre layup infused with a second resin, the selected fibre layup comprising at least one fibre layer covering the face portion of the outer side of the moulded wheel body, the selected fibre layup having a cooperating configuration with the outer side of the wheel body.

The method of this second aspect of the present invention is preferably used to form a carbon fibre wheel according to the first aspect of the present invention. All the features discussed in relation to that first aspect are therefore also applicable to this second aspect of the present invention.

Again, the fascia layer can be formed/ attached over the outer side of the moulded wheel body in a number of ways.

In a first embodiment, the fascia layer comprises a cooperatively shaped moulded body having a cooperating configuration with the outer side of the wheel body, the facia layer being attached onto the face portion and at least a portion of the rim portion of the outer side of the moulded wheel body using an adhesive. The fascia layer is preferably formed in a separate step using a resin transfer moulding (RTM) process, and then attached to the outer side of the moulded wheel body from a second fibre composite composition.

In a second embodiment, the fascia layer is preferably formed on the outer side of the moulded wheel body by overmoulding the second fibre composite composition onto at least a portion of the face portion of the outer side of the moulded wheel body. The fascia layer is preferably overmoulded on the outer side of the moulded wheel body using a resin transfer moulding (RTM) process.

As with the first aspect, the fascia layer is formed/ attached on the face portion and/or at least part of the rim portion of the outer side of the wheel body.

Again, the first resin of the wheel body and the second resin of the fascia layer can be formed from any suitable resin. The first resin and second resin are preferably based on unsaturated polyester, polyurethane, polyvinyl ester, epoxy, thermosets, thermoplastics, or combinations thereof. Again, the first resin may have a different composition to the second resin; or may have the same or similar compositions.

In some embodiments, the second resin has an aesthetically acceptable cured colour (as discussed for the first aspect). In exemplary embodiments, the first resin comprises a thermal performance structural resin, preferably a high thermal performance structural resin. The thermal performance structural resin is preferably selected from at least one of epoxys, bismaleimides, polyimides, benzoxazines, phenolics, cyanate esters, polyurethane, polyester or other thermoset materials. The second resin can comprise any structural resin having an aesthetically acceptable cured colour. The second resin is preferably selected from at least one of epoxy, polyurethane, polyester, or vinylester. Again, in embodiments that aesthetically acceptable cured colour is substantially clear or transparent. The cured second resin may also be translucent, glassy or pellucid in some forms. Again, in particular embodiments, the second resin comprises a polyurethane based resin, preferably a clear polyurethane-based resin. The advantages of using a polyurethane-based resin have been outlined previously, and equally apply to this second aspect of the present invention.

In some embodiments, the second resin comprises a UV resistant resin.

The second resin is infused into the fibre of the fascia layer creating an aesthetic/protective surface layer. The resin and forming process step preferably forms a surface and finish which does not require any subsequent surface finishing or coating processes such as spray painting. A desired surface finish can be achieved through moulding tooling surface design. For example, high gloss, semi-gloss, matt, textured or the like can be applied to the moulded/ overmoulded surface of the facia layer using a desired textured or polished surface. In many cases, a glossy or polished surface can therefore be achieved by using a face mould for the fascia top surface having a highly polished, moulded surface configured to provide a final glossy finish. The application of the facia layer can therefore simplify the wheel production process, by eliminating timely and in some cases costly secondary (post-moulding) finishing and coating processes that may be needed if the finish on the outer surface of the wheel is not acceptable or optimal. Where a desired surface texture is required to be created using a textured or polished mould face surface, the second resin is preferably a polyurethane based resin.

As with the first aspect, the selected fibre layup of the second fibre composition of the facia layer can comprise one or more fibres (for example, a single fibre or a mixture of two or more fibres) that are desired to provide a specific colour and pattern in the layup which is visible through the cured resin. It should be appreciated that the selected fibre layup can have any desired pattern, design or aesthetics formed from the fibre layup and any additional elements added to that layer. In order to form that design, the selected fibre layup can be formed from fibres selected from the group consisting of carbon fibres, glass fibres, aluminised glass fibres, aramid fibres, synthetic fibres such as acrylic, polyester, PAN, PET, PE, PP or PBO-fibres, or the like, bio fibres such as hemp, jute, cellulose fibres or the like, mineral fibres for example Rockwool or the like, metal fibres for example steel, aluminium, brass, copper, or the like, boron fibres or any combination of these. In some embodiments, the selected fibre layup is preferably formed from one or more fibres selected from carbon fibre, aramid fibre or para-aramid fibre (for example Kevlar), glass fibre, polyester fibre, aluminised glass fibres or the like. Those fibres could be coloured so the selected fibre layup may include one or more fibres selected from coloured glass fibres, coloured polyester fibres, coloured carbon fibres or the like. Thus, in some embodiments the selected fibre layup comprises carbon fibres with an amount of additional different fibres to provide a decorative element. However, in many embodiments, the selected fibre layup comprises carbon fibres or at least substantially comprise carbon fibres.

In a number of embodiments, the fascia layer is formed from a second fibre composite composition comprising a carbon fibre layup infused with the second resin. In these embodiments, the fascia layer is typically laid up to look like the decorative outer layer of a carbon fibre part having the distinctive and aesthetically desirable black appearance and regular carbon fibre layup patterning.

The fascia layer can be attached onto outer side of the wheel body using a variety of means, as discussed above in relation to the first aspect of the present invention. In some embodiments, the fascia is connected to the outer side of the wheel body using an adhesive. The adhesive is preferably selected from at least one of of epoxy, polyurethane, or methacrylate adhesive.

The fascia layer can be attached onto and over the outer side of the wheel body using a variety of attachment methods. In some embodiments, the fascia layer is applied manually or by other movement means (e.g. robotic arm or the like) onto the outer side of the wheel body. Once in position, the fascia layer may be allowed to attach to the wheel body (for example adhesive cure or drying) without additional action. However, in some embodiments pressure may be applied to at least a portion of the fascia layer to compress the fascia layer onto the outer side of the wheel body. That pressure may be applied via a compression or pressure means, or may be applied using a mould face or cooperating mould.

In some embodiments, the rim portion of the moulded wheel body includes an inner circumferential surface, and further including the step of: forming a resin cover layer on the inner circumferential surface of the moulded wheel body with the second resin having a cooperating configuration with the inner circumferential surface of the wheel body.

The resin cover layer is overmoulded on the outer side of the moulded wheel body using a resin transfer moulding (RTM) process. The resin cover layer is preferably moulded with a thickness of 100 to 800 microns, preferably 200 to 450 microns, and more preferably less than 500 microns. In some embodiments, the resin cover layer has a thickness of 5 to 500 microns, more preferably 10 to 400 microns. In some embodiments, the resin cover layer has a thickness of 10 to 500 microns, more preferably 10 to 100 microns. Moreover, when the second resin comprises polyurethane, this embodiment can produce a finished clear coated glossy surface on the main visible surfaces of the composite wheel (i.e. those surface that are visible and exposed to the external environment when that wheel is mounted on a wheel mount of a vehicle).

The fascia layer, resin cover layer and shaped body can be formed by various resin based moulding systems known in the art. The moulded wheel body and fascia layer are preferably formed using a resin transfer moulding (RTM) process. That RTM process is preferably a high-pressure resin injection process.

The method of formation of the wheel body and fascia layer typically involves the following general steps:
laying up or otherwise forming the desired shape of the wheel body or fascia layer with the selected composite fibre material in a cooperatively shaped mould;
providing a resin (matrix material) in contact with the laid up material in the mould to form a resin introduced body; and
curing the resin introduced body.

The carbon fibre layup of the wheel body and the selected fibre layup of the fascia layer is preferably provided as at least one of prepregs, semi-pregs, woven or non-woven fabrics, mats, preforms, pre-consolidated pre-forms, individual or groups of fibres, tows, or tow-pregs. The fibre elements of the fibre layup of the wheel body and fascia layer can be provided as at least one fabric sheet, preferably a multi-axial fabric. In embodiments, the second fibre layup comprises a carbon fibre ply of 150 to 300 gsm, preferably a carbon fibre ply of 200 to 250 gsm, more preferably a twill weave ply of 220 gsm. However, it should be appreciated that the ply can have any suitable weave or form, for example a plain weave ply or a twill weave ply. Again, it should be appreciated that the second fibre layup may not exclusively comprise carbon fibre but may be formed from one or more fibres selected from carbon fibre, aramid fibre or para-aramid fibre (for example Kevlar), glass fibre, polyester fibre, aluminised glass fibres or the like.

The fibres and fibre elements of the fibre layup of the wheel body or fascia layer are preferably injected and/or impregnated with a suitable resin (as discussed previously) and then cured, set or the like. The resin is preferably based on unsaturated polyester, polyurethane, polyvinyl ester, epoxy, thermosets, thermoplastics, similar chemical compounds or combinations thereof. Where the wheel body is being formed, the resin (the first resin in the first and second aspects of the present invention) is epoxy-based. Where the fascia layer is being formed, the resin (the second resin in the first and second aspects of the present invention) is preferably a polyurethane.

In some embodiments, a thermoset powder binder is applied to the selected fibre layup in a step prior to overmoulding. The powder binder is preferably applied to the surface of a surface ply material before the plies are cut from the roll for fibre layup.

The laid-up material is typically infused with the resin so that that resin permeates through the material. The wheel body or fascia layer includes the resin (which binds the fibres and other comprising material together) once moulded and formed into the wheel body or fascia layer. During lay-up (preparing up to the point before consolidation and/or setting, curing or the like of the resin), the resin need not be comprised in the layers which include the fibres (e.g. a prepreg or semi-preg) or between the layers comprising fibres. However, the resin should form a continuous matrix after setting occurs.

It should be appreciated that curing of the resin and the associate part such as the wheel body or fascia layer encompasses curing, setting, drying or similar processes.

A variety of resin delivery systems can be used. In some embodiments, at least a part of the resin is provided by Resin Infusion and/or Resin Transfer Moulding and/or Vacuum Assisted Resin Transfer Moulding. The fascia layer can therefore be formed by various resin based moulding systems known in the art. One preferred system is resin transfer moulded (RTM). In embodiments, the fascia layer comprises a resin transfer moulded (RTM) part.

The fibres and fibre elements of the fibre layup of the wheel body of the carbon fibre wheel substantially comprise carbon fibre fibres. The fibres and fibre elements of the fibre layup of the fascia layer preferably substantially comprise carbon fibre fibres. However, again it should be appreciated that a wide variety of other or alternate fibres may also be included in the fibre layup of the wheel body and fascia layer in the present invention, including but not limited to fibres selected from the group consisting of glass fibres, aramid fibres (for example Kevlar), synthetic fibres such as acrylic, polyester, PAN, PET, PE, PP or PBO-fibres, or the like, bio fibres such as hemp, jute, cellulose fibres, or the like, mineral fibres for example Rockwool or the like, metal fibres for example steel, aluminium, brass, copper, or the like, boron fibres or any combination of these. In a preferred embodiment, the fibres comprise carbon fibres or a mixture of carbon fibres with one or more of the above fibres. The fibres may be provided in any desirable orientation in the transition zone like for example unidirectional, biaxial or random or a combination of these. However, the fibres are preferably oriented to reduce the stress between the composite members as well as to strengthen areas of the final structure which will be exposed to a higher stress during service. The orientation of fibres may or may not be the same in all the layers comprising fibres within the transition zone. For example, one or more layers of fibres may be oriented in another manner than other layers, if a stress analysis suggests a multi-axial fibre orientation. However, in other embodiments the fibres may be oriented substantially the same way in all the layers of fibres.

The fibre elements may be provided in any suitable form including in prepregs, semi-pregs, woven or non-woven fabrics, mats, pre-forms, pre-consolidated pre-forms, individual or groups of fibres, tows, tow-pregs, or the like. In embodiments, the fibre elements are provided as at least one fabric sheet, preferably a multi-axial fabric. During lay-up (preparing up to the point before consolidation and/or setting, curing or the like of the resin) of a connection, the resin need not be comprised in the layers comprising fibres (e.g. a prepreg or semi-preg) or between the layers comprising fibres. However, the resin should form a continuous matrix after setting occurs.

The fascia layer is configured to have a cooperating configuration with the outer side of the wheel body. The cooperating configuration is preferably a general geometric cooperation between the fascia layer and the outer side of the wheel body. In this respect, the general contours of the fascia layer and wheel body can be designed to cooperate to assist attachment of the two portions together. More particularly, the general contours of the inner side/ face of the fascia layer and the outer side of the wheel body are designed to cooperate and in some cases be complementary to assist attachment of the two portions together. In some embodiments, the fascia layer can be configured with a cooperating configuration to the face portion and rim portion of the outer side of the wheel body, and preferably with cooperating contours of the connection section, hub section and rim portion of the wheel body.

The present invention also relates to a composite/ carbon fibre wheel formed from a process according to this second aspect of the present invention. The carbon fibre wheel is preferably configured as set out in the first aspect of the present invention.

It should be understood that the term "composite" herein denotes any type of composite material comprising fibres, cured or uncured, irrespective of the structure being layered or not. Furthermore, pre-forms and pre-consolidated pre-forms cured or uncured are important subgroups of composite materials and bodies.

It should also be understood that the term "cured" in "cured composite fibre material" indicates that the composite fibre material has undergone at least a partial curing process to harden, cure or set a curable resin in the composite fibre material.

### BRIEF DESCRIPTION OF THE DRAWINGS

The present invention will now be described with reference to the figures of the accompanying drawings, which illustrate particular preferred embodiments of the present invention, wherein:
Figure 1 is a perspective view of a carbon fibre wheel including a facia layer attached to a carbon fibre wheel body according to one embodiment of the present invention.
Figure 2 is a view of a section of the outer side of a carbon fibre wheel body used in the carbon fibre wheel shown in Figure 1.
Figure 3 provides a perspective view of a carbon fibre fascia layer section according to a first embodiment of the present invention showing: (A) The outer or top side of the fascia section; and (B) The inner or underside of the fascia section.
Figure 4 provides two perspective views of the fascia layer section being applied to a section of the carbon fibre wheel body, showing: (A) the fascia section shown in Figure 3 being aligned with a section of the outer side of the carbon fibre wheel body shown in Figure 2; and (B) the fascia section shown in Figure 3 attached to the section of the outer side of the carbon fibre wheel body shown in Figure 2.
Figure 5 provides (A) a perspective wheel of a carbon fibre wheel body, as shown in Figure 2; and (B) a more detailed view of a rim connection section and adhesive assistance detail of the outer side of that carbon fibre wheel body.
Figure 6 provides an example of adhesive flow over a section of the outer side of the carbon fibre wheel shown in Figure 2.
Figure 7 a view of the outer side of a carbon fibre wheel body according to a second embodiment of the present invention.
Figure 8 provides a view of the carbon fibre layup of a fascia layer laid onto top of the carbon fibre wheel body shown in Figure 7.
Figure 9 provides a view of the resulting overmoulded fascia layer on the carbon fibre wheel body according to the second embodiment of the present invention.
Figure 10 provides a view of the resulting overmoulded fascia layer on the carbon fibre wheel body according to a third embodiment of the present invention.

### DETAILED DESCRIPTION

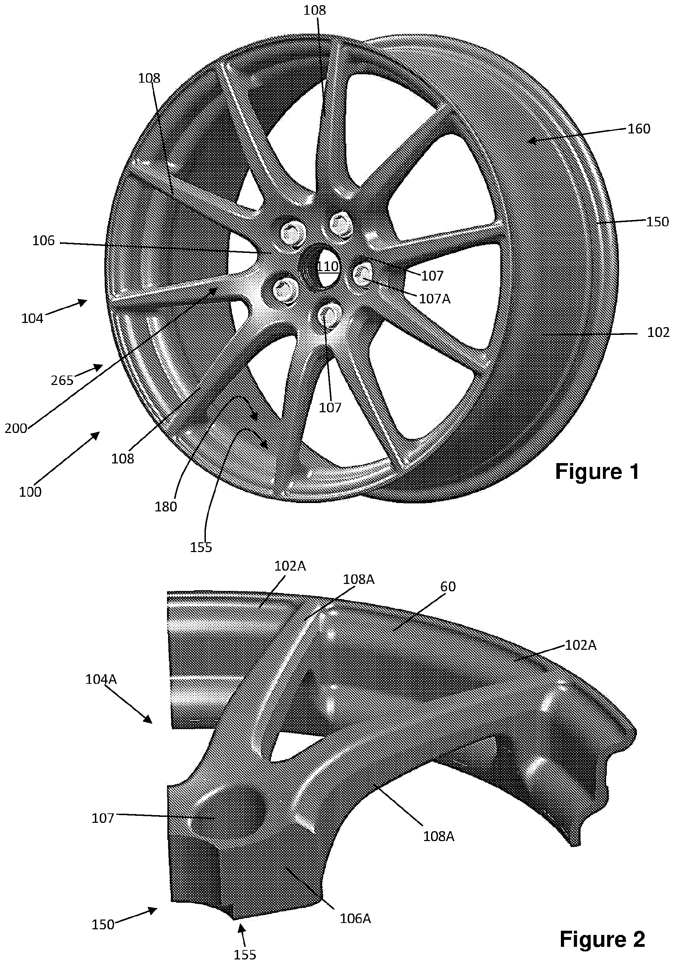

Referring firstly to Figure 1, there is shown a perspective view of a carbon fibre wheel 100 which has been formed from a wheel body 150 and fascia layer 200 according to one embodiment of the present invention. The overall illustrated carbon fibre wheel 100 includes two main sections:
A. A rim portion 102 which comprises an annulus structure onto which a tyre (not illustrated) is mounted; and
B. A face portion 104 comprising a circular hub 106 and a series of spokes 108. The hub 106 includes five fastening apertures 107 (shown with fastening bolts 107A in place in Figure 1 and 2) configured to receive fastening bolts (not illustrated) used to fix the wheel to a wheel mount of a vehicle (not illustrated). The spokes 108 comprise elongate arms connected to the hub 106 at one end and the rim portion 102 at another end. Ten spokes 108 are shown in the illustrated embodiment. However, it should be appreciated that a different number of spokes and spoke configurations could be used, for example five spokes, nine spokes or the like. Alternatively, the spoke portions could be replaced with a disc/disk sections which form the connection between the rim portion 102 and the hub 106.

It should also be appreciated that other carbon fibre wheel configurations are possible that incorporate the fascia layer 200 and wheel body 150 according to the present invention. For example, the carbon fibre wheel 100 may be configured as a center lock carbon fibre wheel (not illustrated) which has a face portion that includes a hub 106 that has a center locking aperture configured to receive a center lock fastening bolt (not illustrated) to fix the wheel to a center lock wheel mount of a vehicle (not shown).

Each of the Applicant's International Patent Publications WO2010/025495A1 and WO2019/033169A1 describes the creation of a one-piece composite wheel. This forms the wheel as a single integrally moulded piece. Unlike the composite wheel taught in International Patent Publication WO2010/025495A1, the carbon fibre wheel 100 shown in Figure 1 is formed from two separately moulded sections. Here a moulded wheel body 150 provides the structural form and elements of the wheel, whilst the external shape and configuration of the face portion 104 of the carbon fibre wheel 100 is provided by a moulded facia 200 which is attached to the outer side 160 of the wheel body 150. The fascia layer 200 provides the desired externally facing surface geometry and finish to the composite wheel 100.

Figures 2 to 6 illustrate a first embodiment of the improved carbon fibre wheel external face demonstrating an adhesively connected fascia embodiment of the present invention. As shown in Figures 2 to 4, the illustrated carbon fibre wheel embodiment comprises:
A. wheel body 150 which includes the rim portion 102A comprising an annulus structure configured to receive and seat a tyre. The wheel body 150 also includes a face portion 104A that has a hub 106A and spokes 108A as described above. The wheel body 150 has an inner side 155 (including inner barrel section 180) configured to face a wheel mount of a vehicle (not illustrated), and an outer side 160 configured to face outwardly when connected to a wheel mount of a vehicle (again not illustrated); and
B. fascia layer 200 attached onto and over the face portion 104A and the rim portion 102A of the outer side 160 of the wheel body 150. The inner face 250 is configured to cooperatively engage with and over the outer side 160 of the wheel body 150. As noted above, the fascia layer 200 has an outer face 265 that provides the external features and aesthetics of the carbon fibre wheel 100.

It should be appreciated that inner barrel section 180 comprises an inner annular surface of the annulus structure of rim portion 102A forming the inner annular wall of the rim portion 102A of the wheel body 150.

The wheel body 150 forms the base structure of the carbon fibre wheel 100, providing the basic form and function of the carbon fibre wheel 100 through which the load is transferred between a tyre (not illustrated) attached to the rim 102 and the hub 106 attached to a wheel mount (not illustrated) of a vehicle. The fascia layer 200 provides a thin aesthetic cover piece which is applied over the outer side 160 of the wheel body 150 to provide the desired external wheel geometry and aesthetics.

The general process of manufacture of the wheel body 150 follows the same process as previously described for an integrally formed carbon fibre wheel 100 described in International Patent Publication WO2010/025495A1.

The illustrated wheel body 150 (Figures 1 and 2) is intended to be formed as a unitary body. This involves simultaneous injection and/or impregnation of a matrix material (typically a resin), which in the exemplary embodiment is a resin, into all parts including the rim portion 102A, and face portion 104A and then curing of each of the portions of the wheel body 150. The resin used is preferably epoxy-based. However, it should be understood that any suitable resin can be used for example unsaturated polyester, polyurethane, polyvinyl ester, epoxy, thermosets, thermoplastics, similar chemical compounds or combinations thereof. A variety of resin delivery systems can be used including, but not limited to Resin Infusion and/or Resin Transfer Moulding and/or Vacuum Assisted Resin Transfer Moulding.

The construction of a wheel body 150 necessitates use of a separate rim portion mould (not illustrated) and a face portion mould (not illustrated), the combination of which provides three main mould faces. Firstly, a face mould, which is generally radially orientated relative to the axis of rotation of the wheel X-X. Secondly, an inner bucket mould face, which forms the inside face of the wheel 150. The inner bucket mould face includes a front face forming the back mould wall of the face portion which is radially orientated relative to the axis of rotation of the wheel X-X and side walls forming the back mould wall of the rim portion that are axially aligned to the axis of rotation of the wheel X-X. Thirdly, the rim moulds are substantially axially aligned to the axis of rotation of the wheel X-X.

In some embodiments, in use, the rim portion 102 is formed by laying up a first set of fibres typically embodied in a reinforcement fabric seated in the rim portion mould, and the face portion 104 is formed by separately laying up a second set of fibres, typically embodied in a reinforcement fabric seated in the face portion mould. The reinforcement fabric from the rim portion mould and face portion mould are then assembled together in a combined mould, with the separate portions being interconnected at a connection point with the connection between the rim portion 102 and face portion 104 being laid up with reinforcement. After forming the connection, a resin is injected and/or impregnated into the reinforcement of each of the rim portion 102, the face portion 104 of the wheel body 150 and then allowed to cure.

It should be appreciated that in other embodiments, the rim portion 102 can be formed as a stacked laminate formed from alternating layers of: a hoop tow layer formed from at least one annularly wound elongate fibre tow; and a bias ply layer as taught in the Applicant's International patent publication No. WO2019/033169A1. As described in that specification, the face portion 104 is interconnected to the rim portion 102 whilst laying up the rim portion 102. The fibre layup of the rim portion is also laid up after the face portion 104 layup is completed so that the connection between the face portion 104 and 102 can be included directly in the fibre layup of the rim portion 102. As described in WO2019/033169A1, the face portion 104 is laid up with reinforcement with connection sections or tabs. The connection sections from the face portion 104 layup are laid onto and into the fibre layup of the rim portion to from the rim portion to face portion interconnection.

The fibre elements of the reinforcement layup may be provided in any suitable form including in prepregs, semi-pregs, woven or non-woven fabrics, mats, pre-forms, pre-consolidated pre-forms, individual or groups of fibres, tows, tow-pregs, or the like. During lay-up, a resin need not be comprised or located in the layers comprising fibres or between the layers comprising fibres. However, the resin should form a continuous matrix though those fibres and layers after curing.

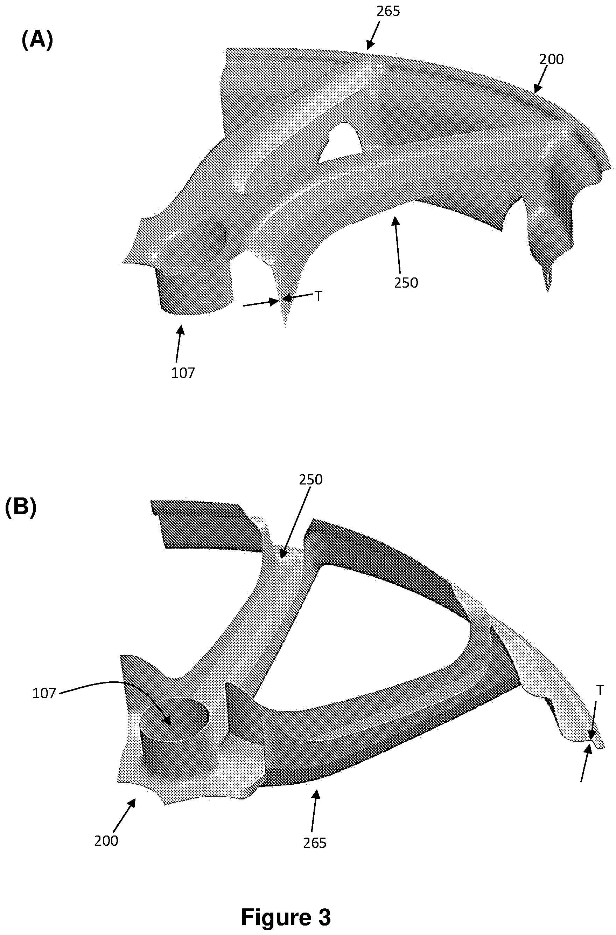

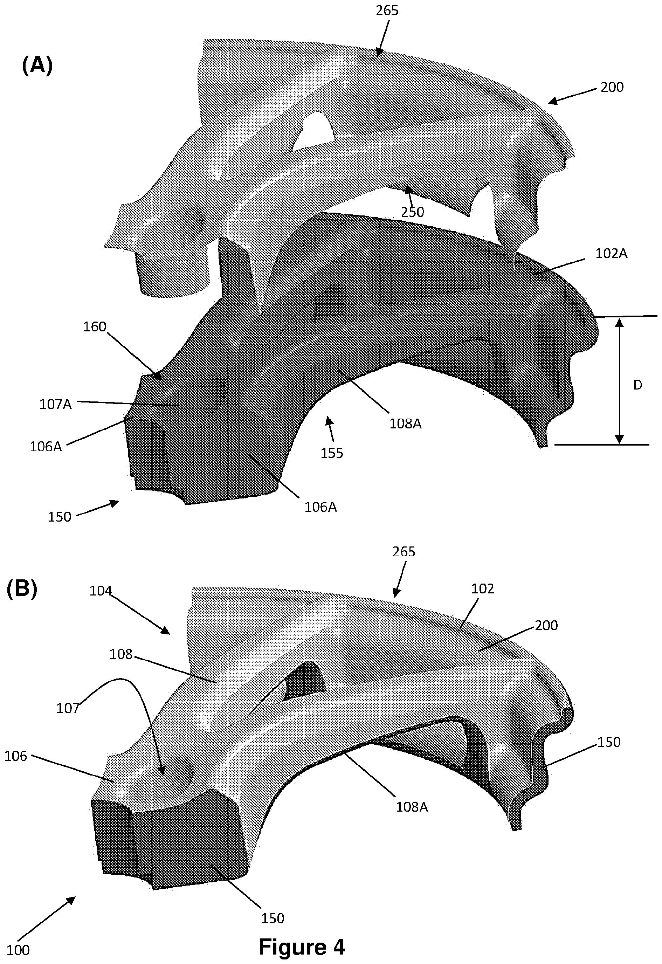

The fascia layer 200 (see Figure 3, 4(A) and 4(B)) is configured to cover and conceal over the entire surface of the face portion and at the rim portion of the outer side 160 of the wheel body 150. The fascia layer 200, and more particularly the outer face 265 of the fascia layer 200, is therefore produced with all the required external features of the carbon fibre wheel 100 shown in Figure 1. As shown in Figure 3, the fascia layer 200 therefore includes the generally circular shape of the hub 104, includes the cooperating central aperture 110. The fascia layer 200 also includes recesses and apertures 107 in the hub through which the wheel mounting arrangements, including fastening bolts (center bolt or plurality of wheel mounting bolts) are inserted (see for example the underside view in Figure 3(B)). In preferred embodiments, these apertures are configured to cooperate and receive the corresponding sections of the wheel attachment arrangements taught in the Applicant's international patent publications WO2013/000009A1 and WO2015/027271A1. Additionally, the fascia layer 200 (and in particular the outer face 265 thereof) includes the desired contours of the annularly spaced apart spokes 108.

Conversely, the outer face 160 of the wheel body 150 can have an unfinished face which is configured to be fully covered by the fascia layer 200. In this way, the wheel body 150 can be moulded with a simple face, having only basic (not detailed) geometry and features. The detailed geometry and features are then provided by the fascia layer 200.

The fascia layer 200 is configured with a shaped and contoured outer face 265 that has the desired finished geometry of the external face of the carbon fibre wheel 100. In some cases, this may be a more complex geometry than the outer surface 160 of the wheel body 150, for example design features for improved aesthetics.

The fascia layer 200 component is designed to have an improved surface finish compared to the surface of a bulk moulded carbon fibre wheel as the fascia comprises a much smaller, thinner moulded part (compared to the bulk wheel) of which the surface quality and finish can be more controlled more easily.

A section of a fascia layer 200 is illustrated in Figures 3 and 4. As shown in those Figures, the fascia layer 200 comprises a thin moulded fibre body configured to be attached over and onto the face portion 104A and the outer facing rim portion 102A of the outer side 160 of the wheel body 150. The fascia layer 200 therefore is preferably moulded with a wall thickness T of from 0.1 to 10 mm, and in the illustrated embodiment between 0.1 and 1 mm (best shown in Figure 3(B). That wall thickness being from 1/50 to 1/1000 the depth D of the wheel body 150 (typically at least 1/100 the depth D of the wheel body 150 and no more than 1/500). However, it should be appreciated that a variety of wall thickness may be used depending on the design of fascia layer 200 used on the wheel body 150. For example, a fascia layer 200 may be manufactured with a 1 to 10 mm wall thickness. Other fascia layer's 200 may be manufactured with a 0.2 to 1 mm wall thickness.

The illustrated fascia layer 200 is preferably configured and attached/ bonded onto the wheel body 150 in a manner that is not obviously a secondarily bonded part. As shown in Figure 4(A) and 4(B), this is achieved by the fascia layer 200 being configured to extend over the entire outer side 160 of the wheel body 150 so to cover and conceal over the entire surface of the face portion 104A and at the rim portion 106A of the outer side 160 of the wheel body 150.

Like the wheel body 150, the fascia layer 200 is formed using a resin transfer moulding (RTM) process. In this process, the fascia layer 200 is formed in a cooperatively shaped mould which is laid up with reinforcement, which subsequently is injected and/or impregnated with resin, to infiltrate that reinforcement and then allowed to cure. The resulting body is a separate moulded fibre composite body.

As discussed previously, the fibre in the moulded fibre composite body of the fascia layer 200 can comprise a wide variety of fibres including but not limited to fibres selected from the group consisting of carbon fibres, glass fibres, aramid fibres (for example Kevlar), synthetic fibres such as acrylic, polyester, PAN, PET, PE, PP or PBO-fibres, or the like, bio fibres such as hemp, jute, cellulose fibres, or the like, mineral fibres for example Rockwool or the like, metal fibres for example steel, aluminium, brass, copper, or the like, boron fibres or any combination of these. The selected fibre layup can have any desired pattern, design or aesthetics formed from the fibre layup and any additional elements added to that layer, as formed from one or more of the above selection of fibres. In particular embodiments, the fibres comprise carbon fibres or a mixture of carbon fibres with one or more of the above fibres. In embodiments, the fibre in the moulded fibre composite body of the fascia layer 200 substantially only comprises carbon fibre.

The fibres elements of the reinforcement layup may be provided in any suitable form including in prepregs, semi-pregs, woven or non-woven fabrics, mats, pre-forms, pre-consolidated pre-forms, individual or groups of fibres, tows, tow-pregs, or the like. During lay-up, a resin need not be comprised or located in the layers comprising fibres or between the layers comprising fibres. However, the resin should form a continuous matrix after curing.

The wheel body 150 and fascia layer 200 can include any suitable resin. The wheel body 150 can be formed from a first resin and the fascia layer 200 can be formed from a second resin. Each of the first and second resins is preferably based on unsaturated polyester, polyurethane, polyvinyl ester, epoxy, thermosets, thermoplastics, or combinations thereof. The first resin and second resin can have the same or similar compositions, or alternatively could have different compositions, for example, specific compositions selected to provide advantageous properties to the respective wheel body 150 and fascia layer 200.

In some embodiments, the wheel body 150 can be formed using a thermal performance structural resin, preferably a high thermal performance structural resin. The thermal performance structural resin is preferably selected from at least one of epoxys, bismaleimides, polyimides, benzoxazines, phenolics, cyanate esters, polyurethane, polyester or other thermoset materials.

In many embodiments, the fascia layer 200 is formed from any structural resin having an aesthetically acceptable cured colour. This fascia resin (second resin) is preferably selected from at least one of epoxy, polyurethane, polyester, or vinylester. The fascia layer 200 can therefore be used to cover undesirable resin colours used to form the wheel body 150. This way an aesthetically acceptable carbon fibre wheel 100 can be formed using an aesthetically unacceptable resin, as the outer surface is covered with the aesthetically acceptable fascia layer 200.

The fascia layer 200 can be attached to the wheel body 150 in a permanent or in a replaceable/ removable manner. In the illustrated arrangement, an adhesive is used to bond the fascia layer 200 to the wheel body 150. As shown in Figures 3 and 4, a moulded wheel body 150 comprising a carbon fibre layup infused with a first resin, is overlaid with a fascia layer 200 comprising a second fibre composite composition comprising a selected fibre layup, for example a carbon fibre layup, infused with a second resin. A layer of adhesive is placed therebetween to attach the fascia layer 200 onto the face portion 104A and at least portion of the rim portion 102A of the outer side 106 of the wheel body 150. The adhesive 260 is preferably selected from one of an epoxy, a polyurethane, or a methacrylate adhesive.

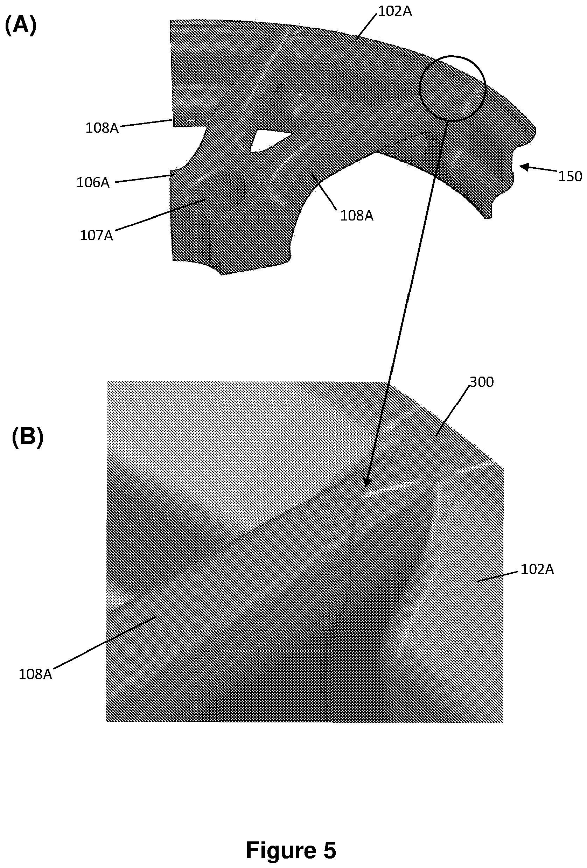

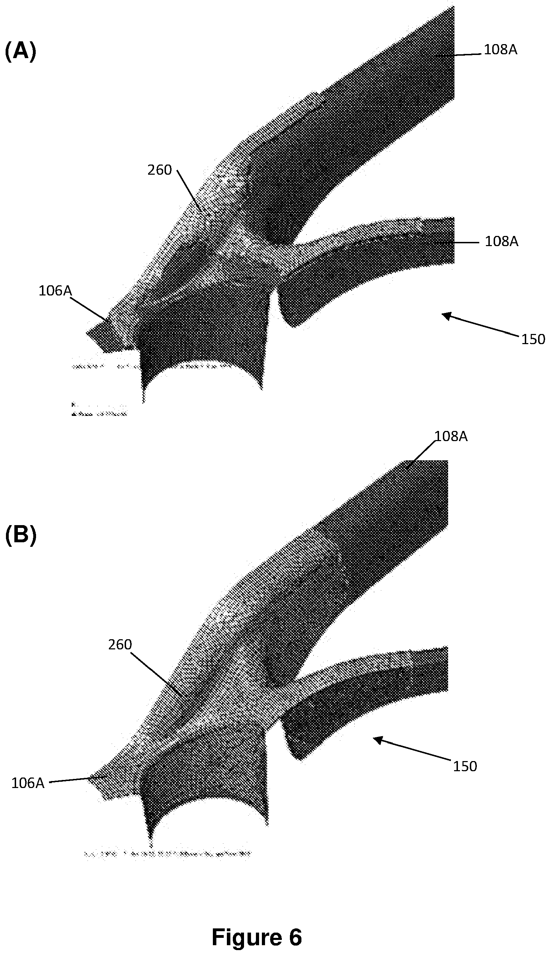

The adhesive 260 can be selected to be able to flow between the outer side 106 of the wheel body 150 and an inner surface 250 of the fascia layer 200 to fill any gaps, recesses or cavities therebetween. As shown in Figure 5(A) and (B), adhesive can be applied to sections of the outer surface 160 of the wheel body 150, in this case at the intersection of the hub 106A and spokes 108A and be designed to flow over the outer surface 160 when the fascia layer 200 is overlaid onto the wheel body 150. Figure 6 shows (A) the application formation of adhesive on that area, and (B) the flow of the adhesive 260 after application of the fascia layer 200 onto that area. The adhesive 260 flows and between the outer side 160 of the wheel body 150 and an inner surface 250 of the fascia layer 200 to fill any cavity, gap or recess therebetween. The adhesive is present in an amount that preferably completely fills the space between the wheel body 150 and fascia layer 200. It should be appreciated however that in some forms, an alternative, lower cost filler material could substitute some of the adhesive used in filling the cavity, gaps or recesses therebetween.

The general contours of the fascia layer 200 and wheel body 150 are designed to cooperate to assist attachment of the two portions together. In this respect, the inner side 250 of the fascia layer 200 can be moulded with a geometry that cooperates, and more preferably is generally complementary to the geometry of the outer side 160 of the wheel body 150. The general contours of the inner side 250 of the fascia layer 200 and outer side 160 of the wheel body 150 are generally complementarily designed to cooperate to assist attachment of the two portions together.

To assist in attachment, the outer side 160 of the wheel body 150 can include recesses or contours configured to cooperatively engage with the fascia layer. As shown in Figure 5, a section of the spoke 108A can include a contour 300 designed to receive adhesive and allow that adhesive to flow between the outer side 160 of the wheel body 150 and an inner surface/ side 250 of the fascia layer 200.

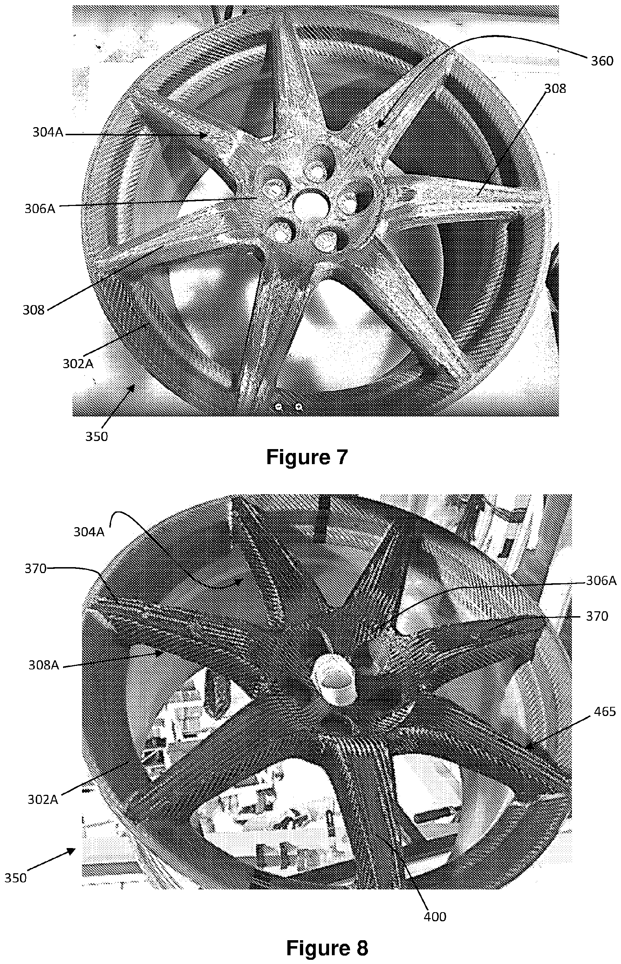

Figures 7 to 9 illustrate a second embodiment of the improved carbon fibre wheel external face demonstrating an overmoulded embodiment of the present invention. As shown in Figure 7 to 9, the illustrated carbon fibre wheel 100 embodiment comprises:
A. wheel body 350 (Figure 7) which includes the rim portion 302A comprising an annulus structure configured to receive and seat a tyre. The wheel body 350 also includes a face portion 304A that has a hub 306A and spokes 308A as described above. The wheel body 350 has an inner side 355 configured to face a wheel mount of a vehicle (not illustrated), and an outer side 360 configured to face outwardly when connected to a wheel mount of a vehicle (again not illustrated); and
B. fascia layer 400 attached onto and over the face portion 304A and the rim portion 302A of the outer side 360 of the wheel body 350. The inner face (not illustrated in the Figures, but the underside of the illustrated fascia layer 400) is configured to cooperatively engage with and over the outer side 360 of the wheel body 350. As with the previous embodiment, the fascia layer 400 has an outer face 465 that provides the external features and aesthetics of the wheel 100.

The wheel body 350 forms the base structure of the carbon fibre wheel 100 (Figure 1), providing the basic form and function of the carbon fibre wheel 100 through which the load is transferred between a tyre (not illustrated) attached to the rim 102 and the hub 106 attached to a wheel mount (not illustrated) of a vehicle. In this embodiment, the fascia layer 400 provides a thin aesthetic cover layer which is moulded over the outer side 360 of the wheel body 350 to provide the desired external wheel geometry and aesthetics.

The general process of manufacture of the wheel body 350 follows the same process as previously described for an integrally formed carbon fibre wheel 100, following as described in International Patent Publication WO2010/025495A1 or in International patent publication No. WO2019/033169A1.

As in the previous embodiment, the illustrated wheel body 350 (Figure 7) is intended to be formed as a unitary body. This involves simultaneous injection and/or impregnation of a matrix material (typically a resin), which in the exemplary embodiment is a resin, into all parts including the rim portion 302A, and face portion 304A and then curing of each of the portions of the wheel body 350. The resin used is preferably epoxy-based. However, it should be understood that any suitable resin can be used for example unsaturated polyester, polyurethane, polyvinyl ester, epoxy, thermosets, thermoplastics, similar chemical compounds or combinations thereof. A variety of resin delivery systems can be used including, but not limited to Resin Infusion and/or Resin Transfer Moulding and/or Vacuum Assisted Resin Transfer Moulding.

The moulded construction of a wheel body 350 follows the same method as described for wheel body 150 above. As described above, the rim portion 302A and the face portion 304A is formed by laying up a set of fibres, typically embodied in a reinforcement fabric which are then assembled together and located into a combined mould, into which a resin is injected and/or impregnated into the reinforcement of each of the rim portion 302A, the face portion 304A of the wheel body 350 and then allowed to cure.

The fibre elements of the reinforcement layup may be provided in any suitable form including in prepregs, semi-pregs, woven or non-woven fabrics, mats, pre-forms, pre-consolidated pre-forms, individual or groups of fibres, tows, tow-pregs, or the like. During lay-up, a resin need not be located in the layers comprising fibres or between the layers comprising fibres. However, the resin should form a continuous matrix after curing.

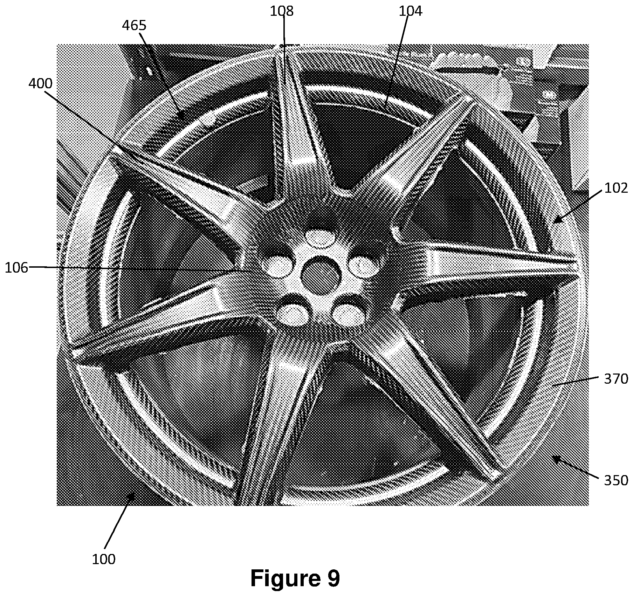

The fascia layer 400 (see Figures 8 and 9) is configured to cover and conceal over the entire surface of the face portion and at the rim portion of the outer side 360 of the wheel body 350 (Figure 7). The outer face 265 of the fascia layer 400 provides all the required external features of the wheel 100 shown in Figure 1. As shown in Figures 8 and 9, the fascia layer 200 therefore includes the generally circular shape of the hub 106, includes the cooperating central aperture 110. The fascia layer 400 also includes the recesses and apertures 107 in the hub through which the wheel mounting arrangements, including fastening bolts (center bolt or plurality of wheel mounting bolts) are inserted. In preferred embodiments, these apertures are configured to cooperate and receive the corresponding sections of the wheel attachment arrangements taught in the Applicant's international patent publications WO2013/000009A1 and WO2015/027271 A1. Again, the fascia layer 400 (and in particular the outer face 265 thereof) includes the desired contours of the annularly spaced apart spokes 108.

As shown in Figure 7, the outer face 360 of the wheel body 350 can have an unfinished face which is configured to be fully covered by the fascia layer 400. In some embodiments, that outer face 360 is produced without a cover ply of carbon fibre, thus revealing undesirable features of the wheel body 350 structure, such as constructional joins and fibre layup through the resin. As with the first embodiment, the wheel body 350 can be moulded with a rough face, with only basic geometry and features. The detailed geometry and features can be included in the fascia layer 400 and/or added as contours/ features to the surface of the outer face 360 of the wheel body 350.

As discussed previously, the fibre in the fascia layer 400 can comprise a wide variety of fibres including but not limited to fibres selected from the group consisting of carbon fibres, glass fibres, coated glass fibres such as aluminised glass fibres, aramid fibres (such as Kevlar), synthetic fibres such as acrylic, polyester, PAN, PET, PE, PP or PBO-fibres, or the like, bio fibres such as hemp, jute, cellulose fibres, or the like, mineral fibres for example Rockwool or the like, metal fibres for example steel, aluminium, brass, copper, or the like, boron fibres or any combination of these. The fibres may also be coloured for example coloured glass fibres, coloured polyester fibres, coloured carbon fibres or the like. The selected fibre layup can have any desired pattern, design or aesthetics formed from the fibre layup and any additional elements added to that layer, as formed from one or more of the above selection of fibres. In particular embodiments, the fibres comprise carbon fibres or a mixture of carbon fibres with one or more of the above fibres. Thus, in some embodiments, the selected fibre layup comprises carbon fibres with an amount of additional different fibres to provide a decorative element. However, in many embodiments, the selected fibre layup comprises carbon fibres or at least substantially comprise carbon fibres. In embodiments, the fibre in the moulded fibre composite body of the fascia layer 400 substantially only comprise carbon fibre.

In this embodiment, the fascia layer 400 comprises a fibre composite layer, for example a carbon fibre composite layer, that is moulded to the wheel body 350 as an overmoulded carbon fibre composite layer. As shown in Figure 8 and 9, the process involves:
STEP 1 - Moulding a wheel body 350 (as described above).

For example, in one embodiment the wheel preform 350 is manufactured from: carbon fibre with 1% epoxy based sizing, 15 gsm epoxy thermoplastic binder, 2K epoxy dicyandiamide spray tackifier, using an Anhydride epoxy resin. However, it should be appreciated that the wheel body could have a variety of different compositions as detailed previously.

Once demoulded from the mould (not illustrated), the wheel body 350 can be de-flashed and then if required, left to cure (post-curing). Once post-curing has been completed, the outer face surface 360 of the wheel body 350 is roughened, typically by abrasively grit blasting that surface, for example using aluminium oxide particles. However, it should be appreciated that other roughening processes such as plasma etching or laser ablation could be used, or alternate processes such as a solvent cleaning process could be used to provide similar adhering advantages. The roughening process assists with adhering the fascia layer to this surface in subsequent steps. The wheel is then cleaned, for example using compressed air followed by a final wipe with a lint free cloth and solution of isopropyl alcohol/water.

STEP 2 - Laying up a fascia fibre layup 370 covering at least the face portion and optionally a portion of the rim portion of the outer side 360 of the wheel body 350. In the example illustrated in Figure 8, the fascia fibre layup 370 comprises a number of shaped carbon fibre plies, in this case a twill weave ply, having a cooperating configuration with the face section 306A of the outer side 360 of the wheel body 350. It should however, be appreciated that any suitable type of carbon fibre ply (or alternative fibre ply) could be used, for example plain weave, twill weave, or the like depending on the required aesthetic design required for that external face. In some instances, carbon fibre plies can be used, and preformed to shape through heating for application in position on the relevant surfaces of the face portion and rim portion of the outer side 360 of the wheel body 350. Moreover, whilst not illustrated in Figure 6, a portion of the outer rim 102 could also be covered with carbon fibre plys of the fascia fibre layup 370. In some embodiments, a tackifier adhesive (for example 2K epoxy dicyandiamide spray tackifier) can be used to fix the fascia fibre layup 370 onto the outer side 360 of the wheel body 350. However, it should be appreciated that other adhesive means for example a thermoset powder binder could be used for this purpose (see below). Where a tackifier is used, it is preferred for a heated tool, such as an isothermal tool, to be used to press the layup against the wheel body 350 and cure (typically fully cure) the 2K epoxy tackifier. The resulting consolidated dry fibre layer thickness of the fascia fibre layup 370 is typically around 250 microns.

STEP 3 - placing the fascia fibre layup 370 covered wheel body 350 into a cooperating mould, injecting resin into the cavity of the mould such that the fascia fibre layup 370 is infused with resin (the second resin) within the confines of the mould face and the outer side 360 of the wheel body 350, and allowing the resin to cure. In this respect, a cavity thickness range of 200 to 500 microns is preferred to provide a moulded surface finish that requires no rectification prior to further finishing processes (if required) for example an optional painting step. The toolset restricts injected resin to fascia fibre layup 370 and fascia region only. In exemplary embodiments, the face mould (not illustrated) for the top surface of the fascia layer 400 is a highly polished, moulded surface configured to provide a final glossy finish, particularly when a polyurethane resin is used. In this case, no further finishing process such a spray painting a clear coating or other coating, polishing or the like is required.

Thus, in some embodiments the second resin is infused into the fibre of the fascia layer creating an aesthetic/protective surface layer. The resin and forming process step preferably forms a surface and finish which does not require any subsequent surface finishing or coating processes such as spray painting.

The fascia layer 400 is formed on the outer side 360 of the wheel body 350 by overmoulding the fascia fibre layup 370 onto the face portion and an optional portion of the rim portion of the outer side of the wheel body 350. This forms a facia layer 400 on the outer side of the wheel body 350 of a second fibre composite composition comprising the fascia fibre layup 370 infused with a second resin. As described in more detail below, that second resin having an aesthetically acceptable cured colour. Thus, overall the wheel body 350, the fascia layer 400 is formed on the wheel body 350 using a resin transfer moulding (RTM) process.

STEP 4 - The overmoulded fascia wheel body 350 is demoulded and then sent for subsequent finishing processing. In some embodiments, no external release agent is used as this can be added into the second resin composition used in the overmoulding process.

The resulting thickness of the fascia layer is generally between 450 to 750 microns (250 microns fibre plus up to 500 microns coating layer) depending on the cavity thickness between the mould face (not illustrated) and the outer side 360 of the wheel body 350. However, it should be appreciated that a variety of wall thickness may be used depending on the design of fascia layer 400 used on the wheel body 350. The process aims to provide a fascia layer 400 that has no porosity, no dryness; no fibre distortion; meets gloss/matte specifications out of mould.

The fibres elements of the reinforcement layup may be provided in any suitable form including in prepregs, semi-pregs, woven or non-woven fabrics, mats, pre-forms, pre-consolidated pre-forms, individual or groups of fibres, tows, tow-pregs, or the like. During lay-up, a resin need not be comprised or located in the layers comprising fibres or between the layers comprising fibres. However, the resin should form a continuous matrix though those fibres and layers after curing.

The wheel body 350 and fascia layer 400 can include any suitable resin. The wheel body 350 can be formed from a first resin and the fascia layer 400 can be formed from a second resin. Each of the first and second resins is preferably based on unsaturated polyester, polyurethane, polyvinyl ester, epoxy, thermosets, thermoplastics, or combinations thereof.

In embodiments, the wheel body 350 can be formed using a non-translucent coloured/ cured colour resin. The removal of the 'translucent' colour constraint in the structural resin used in forming the wheel body 350 creates formulation opportunities for the structural resin not limited to and possibly combinations of one or more of:
- Tougher resin;
- Lower cost resin;
- Higher elongation to failure resin;
- Higher Thermal performance resin;
- Shorter cure cycle time resin; or
- Other resin mechanical property improvements.

Thus, in some embodiments, the wheel body 350 can be formed using a thermal performance structural resin, preferably a high thermal performance structural resin. The thermal performance structural resin is preferably selected from at least one of epoxys, bismaleimides, polyimides, benzoxazines, phenolics, cyanate esters, polyurethane, polyester or other thermoset materials.

The fascia layer 400 is preferably formed from any resin (second resin) having an aesthetically acceptable cured colour. The second resin is preferably selected from at least one of epoxy, polyurethane, polyester, or vinylester. The fascia layer 400 can therefore be used to cover undesirable resin colours used to form the wheel body 350. This way an aesthetically acceptable carbon fibre wheel 100 can be formed using an aesthetically unacceptable resin, as the outer surface is covered with the aesthetically acceptable fascia layer 400. As discussed above, an aesthetically acceptable cured colour is typically a clear or translucent colour which enables the carbon fibre to be seen within the cured resin composite structure. A dedicated aesthetic/clear fascia resin allows relaxation of some formulation constraints - for example Tg, which enables other properties of the structural wheel 350 to be improved, for example toughness and elongation to failure.

In many embodiments, the second resin infused into the fascia ply layup in step 3 comprises a UV resistant resin.

In some embodiments, the second resin used for the fascia layer 400 comprise a polyurethane resin, and preferably a clear polyurethane resin. The use of a polyurethane resin has the following advantages:
- Polyurethane resin does not require a protective coating, applied for example by spray painting. Epoxy resin requires a protective coating to protect the epoxy. Thus, no additional surface finishing such as spray-painting is required. In addition, a polyurethane resin can provide an advantageous self-healing functionality.
- Using polyurethane resin as an alternative to spray painting avoids any issues with orange peel defects that can occur when spray painting coatings to protect epoxy resin.
- In terms of process efficiencies, using a Polyurethane resin has a much faster cure time than epoxy resins, with polyurethane resins having a cure cycle time of less than 4 mins compared to epoxy resin with cure cycle time of ~6 to 10 minutes. Furthermore, polyurethane resins can include a release agent to assist in removal of the moulded wheel from a mould cavity. Whereas epoxy resins generally require use of an external release agent.
- Improved properties - epoxy resin can be susceptible to cracking if the resin thickness exceeds a threshold. Relatively, a polyurethane resin is comparatively less brittle so has a higher thickness threshold, i.e. it will be less sensitive to thickness. Moreover, for relatively thicker coatings, the current epoxy resin shows shrink back which is not acceptable, aesthetically. Polyurethane resin is not expected to show the same defect.
- The relatively thicker polyurethane resin rich layer is less susceptible to defects in the fibre layer such as raised fibrous bumps. Polyurethane resin is inherently clearer than epoxy resin.
- Polyurethane resin provides minimal to no shrink-back in coating thicknesses up to 800 micron, unlike epoxy-based coatings.
- Polyurethane resin also provides the ability to mould a variety of surface finishes, affected by tooling surface design, for example high Gloss, semi-gloss, matt, textured etc. and the ability to achieve a variety of non-clear finishes by adding pigment/colours to the Fascia resin, for example tinted finish.

In some embodiments, no tackifier adhesive is used to fix the fascia fibre layup 370 onto the outer side 360 of the wheel body 350. A thermoset powder binder (generally epoxy based but there are variations) could alternatively be applied to the dry fascia fibre layup 370. This powder binder has possibly three functions:
a. 'Weaveset' - where the embedded powder binder assists in preventing tows from falling out of the ply making up the fascia fibre layup 370 - this tends to occur at the cut edges of the ply and can make layup time consuming and also cause aesthetic defects.
b. Adhesion of the fascia fibre layup 370 to the wheel body 350 - to prevent fibre wash.
c. Preformability of the fascia fibre layup 370 prior to layup.

The general contours of the fascia layer 400 and wheel body 350 are designed to cooperate to assist attachment of the two portions together. In this respect, the inner side of the fascia layer 400 can be moulded with a geometry that cooperates, and more preferably is generally complementary to the geometry of the outer side 360 of the wheel body 350. The general contours of the inner side of the fascia layer 400 and outer side 360 of the wheel body 350 are generally complementarily designed to cooperate to assist attachment of the two portions together. Where required, features in the design (for example ridges on front of spoke edges of the face portion 306) that may be desirable to improve styling/character/aesthetics can be created via the use of solid inserts tacked or bonded to the outer side 360 of the wheel body 350. Solid inserts may be manufactured using carbon fibre and resin material, or alternatively a less expensive material for example glass microsphere filled or thixotropic filled epoxy resin. In some embodiments, lower cost filler materials could be used to completely fill the space between the wheel body and the fascia layer 400. The wheel body 350 can be therefore by produced as a simpler or generic design with the overmoulded fascia layer 400 having a more complicated geometry. It should be appreciated that it can be more cost effective to fill between the wheel body and the surface ply layer using a filler material than it is to use a fibrous structural material.

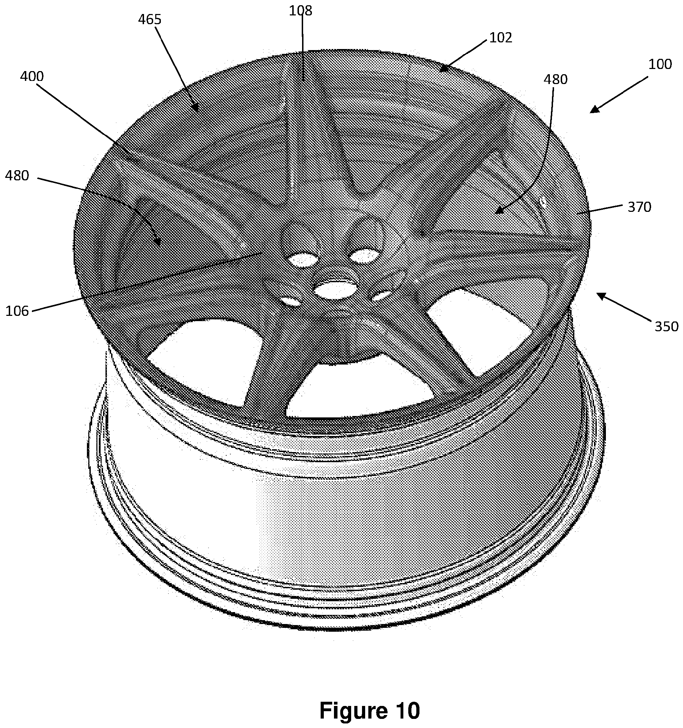

Figure 10 illustrates a third embodiment of the improved carbon fibre wheel external face demonstrating a second overmoulded embodiment of the present invention. This third embodiment is an alternative embodiment to the second (overmoulded) embodiment illustrated in Figures 7 to 9 in which the internal surface of the barrel 180 is also overmoulded in the second overmoulding process - Step 3 described above - to form an overmoulded inner barrel layer 480 thereon. This embodiment also preferably produces a finished clear coated glossy surface on the main visible surfaces of the composite wheel 100 when that wheel is mounted on a wheel mount of a vehicle (not illustrated) using the overmoulding process.

In this embodiment, the fascia layer 400 comprises a carbon fibre composite layer that is moulded to the wheel body 350 as an overmoulded fibre composite layer, and additionally includes an overmoulded inner barrel surface 480 formed in the overmoulding process. The process largely follows the previously described process shown in Figure 8 and 9 involving:

STEP 1, and STEP 2 follow the same process as described for the second embodiment above.

STEP 3 - As described for the second embodiment, the fascia fibre layup covered wheel body 350 is then placed into a cooperating mould (not illustrated). In this case, the cooperating mould includes a resin infusion space in the mould cavity (not illustrated) where the fascia fibre layup is infused with resin within the confines of the mould face and the at least the face portion 104 of the wheel body 350, and also a resin infusion space in the mould cavity within the confines of the mould face and the at least the inner barrel 180 section of the rim 102 which is configured to enable a resin layer to be formed over the inner barrel 180 section of the wheel body 150. The resin, preferably a polyurethane resin in this embodiment (though it should be appreciated that another second resin could be used as detailed previously) is mixed, for example impingement mixed, and high-pressure injection is used to fill the cavities and fascia fibre layup with that resin. The resin is then allowed to cure.

Again, the toolset is configured to restrict injected resin to fascia fibre layup 370 and fascia region, as well as the inner barrel 180 section of the wheel body 150. In exemplary embodiments, the face mould (not illustrated) for the top surface of the fascia layer 400 is a highly polished, moulded surface configured to provide a final glossy finish, particularly when a polyurethane resin is used. In this case, no further finishing process such a spray painting a clear coating or other coating is required. A cavity thickness range of 200 to 500 microns is preferred to provide a moulded surface finish that requires no rectification.

As with the second embodiment, the fascia layer 400 is formed on the outer side 360 of the face portion wheel body 350 by overmoulding the fascia fibre layup 370 onto the face portion 104 and an optional portion of the rim portion 102 of the outer side of the wheel body 350. In this embodiment, a moulded resin cover layer 480 is also formed on the inner barrel 180. As described in more detail below, that second resin can be selected to provide desired properties to the face portion 102 and inner barrel 180. Thus, overall the wheel body 350, the fascia layer 400 is formed on the wheel body 350 using a resin transfer moulding (RTM) process.

STEP 4 - The overmoulded fascia wheel body 350 is demoulded and then sent for subsequent finishing processing. Again, in some embodiments, no external release agent is used as this can be added into the second resin composition used in the overmoulding process.

The resulting thickness of the fascia layer is generally between 450 to 750 microns (250 microns fibre plus up to 500 microns coating layer) depending on the cavity thickness between the mould face (not illustrated) and the outer side 360 of the wheel body 350. However, it should be appreciated that a variety of wall thickness may be used depending on the design of fascia layer 400 used on the wheel body 350.

In these embodiments, the production of a separate structural wheel body which is then overmoulded with fascia layer 400 (overmoulded fascia) and the moulded resin cover layer 480 enables the production of an aesthetically acceptable wheel with one or more of high thermal performance, improved structural performance, and reduced cost. As above, the fascia layer 400 has improved surface finish compared to the underlying face portion of the wheel body. Any aesthetic defects on the structural wheel moulding are completely covered by the overmoulded fascia. The process aims to provide a fascia layer 400 and moulded resin cover layer 480 that has no porosity, no dryness; no fibre distortion; meets gloss/matte specifications out of mould.

As described for the second embodiment, the wheel body 350 and fascia layer 400 can include any suitable resin. The wheel body 350 can be formed from a first resin and the fascia layer 400 can be formed from a second resin. Each of the first and second resins is preferably based on unsaturated polyester, polyurethane, polyvinyl ester, epoxy, thermosets, thermoplastics, or combinations thereof.

Similarly, the fascia layer 400 and moulded resin cover layer 480 is preferably formed from any resin (second resin) having an aesthetically acceptable cured colour. The second resin is preferably selected from at least one of epoxy, polyurethane, polyester, or vinylester. In many embodiments, the second resin infused into the fascia ply layup in step 3 comprises a UV resistant resin. In preferred forms of this third embodiment, the second resin used for the fascia layer 400 and moulded resin cover layer 480 comprises a polyurethane resin, and preferably a clear polyurethane resin. The various advantages of using a polyurethane resin are detailed above, but importantly for this embodiment allow both the the fascia layer 400 and moulded resin cover layer 480 to be produced with a final glossy finish, where no further finishing process such a spray painting a clear coating or other coating is required. In this respect, a clear polyurethane resin on the moulded resin cover layer 480 on the the inner barrel coating is applied as a protective coating to that surface. An uncoated epoxy can be eroded under weathering conditions. Epoxy therefore needs to be coated using a sprayed-on coating for example a clear coating, or in this case in the moulding process to provide a polyurethane protective coating over the epoxy resin.

Those skilled in the art will appreciate that the invention described herein is susceptible to variations and modifications other than those specifically described. It is understood that the invention includes all such variations and modifications which fall within the spirit and scope of the present invention.

Where the terms "comprise", "comprises", "comprised" or "comprising" are used in this specification (including the claims) they are to be interpreted as specifying the presence of the stated features, integers, steps or components, but not precluding the presence of one or more other feature, integer, step, component or group thereof.

## Claims

1. A carbon fibre wheel (100) for a vehicle, the carbon fibre wheel comprising
a wheel body (150) comprising a rim portion (102) and a face portion (104), the rim portion comprises an annulus structure configured to receive and seat a tyre, the face portion including a hub (106) configured to fix the wheel to the vehicle, and a connection structure that extends between and interconnects the hub and the rim, the wheel body having an inner side (155) configured to face a wheel mount of a vehicle, and an outer side (160) configured to face outwardly when connected to a wheel mount of a vehicle, the wheel body being formed from a first carbon fibre composite composition comprising a carbon fibre layup infused with a first resin; and
a fascia layer (200) attached to at least a portion of the face portion of the outer side of the wheel body, the fascia layer being formed from a second fibre composite composition **characterized in** comprising a selected fibre layup infused with a second resin
wherein the first resin has a different composition to the second resin.

2. The carbon fibre wheel to claim 1, wherein the fascia layer comprises a fibre composite layer that is moulded to the wheel body, preferably an overmoulded fibre composite layer.

3. The carbon fibre wheel to claim 1, wherein the fascia layer comprises a moulded fibre composite layer that is adhered to the wheel body, preferably adhered to the wheel body using an adhesive.

4. The carbon fibre wheel according to any preceding claim, wherein at least the second resin has an aesthetically acceptable cured colour comprising at least one of substantially clear, transparent, translucent, glassy or pellucid, preferably having a high gloss, semi-gloss, matt, or textured surface finish.

5. The carbon fibre wheel according to any preceding claim, wherein the second resin comprises a UV resistant resin.

6. The carbon fibre wheel according to any preceding claim, wherein the first resin comprises a thermal performance structural resin, preferably a high thermal performance structural resin, preferably selected from epoxys, bismaleimides, polyimides, benzoxazines, phenolics, cyanate esters, polyurethane, or polyester based resins, and preferably the second resin comprises a structural resin, preferably selected from epoxy, polyurethane, polyester, vinylester based resins.

7. The carbon fibre wheel according to any preceding claim, wherein the selected fibre layup is formed from at least one fibre selected from carbon fibre, aramid fibre, para-aramid fibre, glass fibre, polyester fibre or aluminised glass fibres.

8. The carbon fibre wheel according to any preceding claim, wherein the fascia layer is attached to at least one of: the face portion of the outer side of the wheel body; or at least part of the rim portion of the outer side of the wheel body.

9. A method of forming a carbon fibre wheel (100), comprising:
forming a moulded wheel body (150) from a first carbon fibre composite composition comprising a first carbon fibre layup infused with a first resin, the moulded wheel body comprising a rim portion (102) and a face portion (104), the rim portion comprising an annulus structure configured to receive and seat a tyre, the face portion including a hub (106) configured to fix the wheel to the vehicle, and a connection structure that extends between and interconnects the hub and the rim, the wheel body having an inner side configured to face a wheel mount of a vehicle, and an outer side configured to face outwardly when connected to a wheel mount of a vehicle;
forming a fascia layer (200) on the outer side of the moulded wheel body from a second fibre composite composition comprising a selected fibre layup infused with a second resin, the selected fibre layup comprising at least one fibre layer covering at least a portion of the face portion of the outer side of the moulded wheel body, the selected fibre layup having a cooperating configuration with the outer side of the wheel body,
**characterized in that** the first resin has a different composition to the second resin.

10. The method of claim 9, wherein the fascia layer is formed on the outer side of the moulded wheel body by overmoulding the second fibre composite composition onto at least a portion of the face portion of the outer side of the moulded wheel body, preferably using a resin transfer moulding (RTM) process.

11. The method of claim 9 or 10, wherein the fascia layer is formed on the face portion and at least part of the rim portion of the outer side of the wheel body.

12. The method of claim 9, wherein the fascia layer comprises a cooperatively shaped moulded body having a cooperating configuration with the outer side of the wheel body, the facia layer being attached onto the face portion and at least portion of the rim portion of the outer side of the moulded wheel body using an adhesive.

13. The method of any one of claims 9 to 12, wherein the second resin has an aesthetically acceptable cured colour comprising at least one of substantially clear, transparent, translucent, glassy or pellucid, preferably having a high gloss, semi-gloss, matt, or textured surface finish.

14. The method of any one of claims 9 to 13, wherein the first resin comprises a thermal performance structural resin, preferably a high thermal performance structural resin, preferably selected from at least one of epoxys, bismaleimides, polyimides, benzoxazines, phenolics, cyanate esters, polyurethane, or polyester based resins, and preferably the second resin comprises a structural resin, preferably selected from at least one of epoxy, polyurethane, polyester, or vinylester based resins.

15. The method according to any one of claims 9 to 14, wherein the selected fibre layup is formed from at least one fibre selected from carbon fibre, aramid fibre, para-aramid fibre, glass fibre, polyester fibre or aluminised glass fibres.

## Patentansprüche

1. Kohlenstofffaserrad (100) für ein Fahrzeug, wobei das Kohlenstofffaserrad Folgendes umfasst:
einen Radkörper (150), der einen Felgenabschnitt (102) und einen Vorderflächenabschnitt (104) umfasst, wobei der Felgenabschnitt eine Ringstruktur umfasst, die konfiguriert ist zum Aufnehmen und Lagern eines Reifens, wobei der Vorderflächenabschnitt eine Nabe (106) einschließt, die konfiguriert ist zum Fixieren des Rads am Fahrzeug, und eine Verbindungsstruktur, die sich zwischen der Nabe und der Felge erstreckt und diese untereinander verbindet, wobei der Radkörper eine Innenseite (155) aufweist, die so konfiguriert ist, dass sie zu einer Radhalterung eines Fahrzeugs zeigt, und eine Außenseite (160), die so konfiguriert ist, dass sie nach außen zeigt, wenn sie mit einer Radhalterung eines Fahrzeugs verbunden ist, wobei der Radkörper aus einer ersten Kohlenstofffaser-Kompositzusammensetzung gebildet ist, die einen mit einem ersten Harz infundierten Kohlenstofffaserlagenaufbau umfasst; und
eine Faszienschicht (200), die an mindestens einem Abschnitt des Vorderflächenabschnitts der Außenseite des Radkörpers angebracht ist, wobei die Faszienschicht aus einer zweiten Faserkompositzusammensetzung gebildet ist, die **dadurch gekennzeichnet ist, dass** sie einen mit einem zweiten Harz infundierten ausgewählten Faserlagenaufbau umfasst,
wobei das erste Harz eine unterschiedliche Zusammensetzung aufweist als das zweite Harz.

2. Kohlenstofffaserrad nach Anspruch 1, wobei die Faszienschicht eine Faserkompositschicht umfasst, die an den Radkörper formgepresst ist, vorzugsweise eine aufgeformte Faserkompositschicht.

3. Kohlenstofffaserrad nach Anspruch 1, wobei die Faszienschicht eine formgepresste Faserkompositschicht umfasst, die an den Radkörper geklebt ist, die vorzugsweise unter Verwendung eines Klebestoffs an den Radkörper geklebt ist.

4. Kohlenstofffaserrad nach einem der vorstehenden Ansprüche, wobei mindestens das zweite Harz eine ästhetisch akzeptable gehärtete Farbe aufweist, die mindestens eines umfasst von im Wesentlichen klar, transparent, durchscheinend, glasig oder durchsichtig, die vorzugsweise eine hochglänzende, halbglänzende, matte oder texturierte Oberflächengüte aufweist.

5. Kohlenstofffaserrad nach einem der vorstehenden Ansprüche, wobei das zweite Harz ein UV-beständiges Harz umfasst.

6. Kohlenstofffaserrad nach einem der vorstehenden Ansprüche, wobei das erste Harz ein Wärmeleistungs-Strukturharz, vorzugsweise ein Wärmehochleistungs-Strukturharz umfasst, vorzugsweise ausgewählt aus Epoxidharzen, Bismaleimiden, Polyimiden, Benzoxazinen, Phenolharzen, Zyanatestern, Polyurethanen oder Harzen auf Polyesterbasis, und vorzugsweise das zweite Harz ein Strukturharz umfasst, vorzugsweise ausgewählt aus Epoxidharz, Polyurethanen, Polyester, Harzen auf Vinylesterbasis.

7. Kohlenstofffaserrad nach einem der vorstehenden Ansprüche, wobei der ausgewählte Faserlagenaufbau aus mindestens einer Faser geformt ist, ausgewählt aus Kohlenstofffaser, Aramidfaser, Para-Aramidfaser, Glasfaser, Polyesterfaser oder aluminiumbeschichteten Glasfasern.

8. Kohlenstofffaserrad nach einem der vorstehenden Ansprüche, wobei die Faszienschicht an mindestens einem angebracht ist von: dem Vorderflächenabschnitt der Außenseite des Radkörpers; oder mindestens einem Teil des Felgenabschnitts der Außenseite des Radkörpers.

9. Verfahren zum Bilden eines Kohlenstofffaserrads (100), umfassend:
Bilden eines formgepressten Radkörpers (150) aus einer ersten Kohlenstofffaser-Kompositzusammensetzung, die einen mit einem ersten Harz infundierten ersten Kohlenstofffaserlagenaufbau umfasst, wobei der formgepresste Radkörper einen Felgenabschnitt (102) und einen Vorderflächenabschnitt (104) umfasst,
wobei der Felgenabschnitt eine Ringstruktur umfasst, die konfiguriert zum Aufnehmen und Lagern eines Reifens, wobei der Vorderflächenabschnitt eine Nabe (106) einschließt, die konfiguriert ist zum Fixieren des Rads am Fahrzeug, und eine Verbindungsstruktur, die sich zwischen der Nabe und der Felge erstreckt und diese untereinander verbindet, wobei der Radkörper eine Innenseite aufweist, die so konfiguriert ist, dass sie zu einer Radhalterung eines Fahrzeugs zeigt, und eine Außenseite, die so konfiguriert ist, dass sie nach außen zeigt, wenn sie mit einer Radhalterung eines Fahrzeugs verbunden ist;
Bilden einer Faszienschicht (200) an der Außenseite des formgepressten Radkörpers aus einer zweiten Faserkompositzusammensetzung, die einen mit einem zweiten Harz infundierten ausgewählten Faserlagenaufbau umfasst, wobei der ausgewählte Faserlagenaufbau mindestens eine Faserschicht umfasst, die mindestens einen Abschnitt des Vorderflächenabschnitts der Außenseite des formgepressten Radkörpers abdeckt, wobei der ausgewählte Faserlagenaufbau eine mit der Außenseite des Radkörpers kooperierende Konfiguration aufweist,
**dadurch gekennzeichnet, dass** das erste Harz eine unterschiedliche Zusammensetzung aufweist als das zweite Harz.

10. Verfahren nach Anspruch 9, wobei die Faszienschicht an der Außenseite des formgepressten Radkörpers durch Aufformen der zweiten Faserkompositzusammensetzung auf mindestens einen Abschnitt des Vorderflächenabschnitts der Außenseite des formgepressten Radkörpers gebildet ist, vorzugsweise unter Verwendung eines Prozesses des Harzinjektionsverfahrens (Resin Transfer Moulding, RTM).

11. Verfahren nach Anspruch 9 oder 10, wobei die Faszienschicht auf dem Vorderflächenabschnitt und mindestens einem Teil des Felgenabschnitts der Außenseite des Radkörpers gebildet ist.

12. Verfahren nach Anspruch 9, wobei die Faszienschicht einen kooperativ geformten formgepressten Körper umfasst, der eine mit der Außenseite des Radkörpers kooperierende Konfiguration aufweist, wobei die Faszienschicht auf dem Vorderflächenabschnitt und mindestens einem Abschnitt des Felgenabschnitts der Außenseite des formgepressten Radkörpers unter Verwendung eines Klebestoffs angebracht ist.

13. Verfahren nach einem der Ansprüche 9 bis 12, wobei das zweite Harz eine ästhetisch akzeptable gehärtete Farbe aufweist, die mindestens eines umfasst von im Wesentlichen klar, transparent, durchscheinend, glasig oder durchsichtig, die vorzugsweise eine hochglänzende, halbglänzende, matte oder texturierte Oberflächengüte aufweist.

14. Verfahren nach einem der Ansprüche 9 bis 13, wobei das erste Harz ein Wärmeleistungs-Strukturharz, vorzugsweise ein Wärmehochleistungs-Strukturharz umfasst, vorzugsweise ausgewählt aus mindestens einem von Epoxidharzen, Bismaleimiden, Polyimiden, Benzoxazinen, Phenolharzen, Zyanatestern, Polyurethanen oder Harzen auf Polyesterbasis, und vorzugsweise das zweite Harz ein Strukturharz umfasst, vorzugsweise ausgewählt aus einem von Epoxidharz, Polyurethanen, Polyester, Harzen auf Vinylesterbasis.

15. Verfahren nach einem der Ansprüche 9 bis 14, wobei der ausgewählte Faserlagenaufbau aus mindestens einer Faser geformt ist, ausgewählt aus Kohlenstofffaser, Aramidfaser, Para-Aramidfaser, Glasfaser, Polyesterfaser oder aluminiumbeschichteten Glasfasern.

## Revendications

1. Roue (100) en fibres de carbone destinée à un véhicule, la roue en fibres de carbone comprenant :
un corps (150) de roue comprenant une partie jante (102) et une partie face (104), la partie jante comprenant une structure annulaire configurée pour recevoir et supporter un pneu, la partie face incluant un moyeu (106) configuré pour fixer la roue au véhicule, et une structure de liaison qui s'étend entre le moyeu et la jante et les relie entre eux, le corps de roue ayant un côté interne (155) configuré pour être tourné vers un support de roue d'un véhicule, et un côté externe (160) configuré pour être tourné vers l'extérieur lorsqu'il est relié à un support de roue d'un véhicule, le corps de roue étant formé à partir d'une première composition composite de fibres de carbone comprenant un empilement de fibres de carbone imprégné d'une première résine ; et
une couche de carénage (200) fixée à au moins une partie de la partie face du côté externe du corps de roue, la couche de carénage étant formée à partir d'une seconde composition composite de fibres **caractérisée en ce qu'**elle comprend un empilement de fibres sélectionné imprégné d'une seconde résine,
la première résine présentant une composition différente de la seconde résine.

2. Roue en fibres de carbone selon la revendication 1, dans laquelle la couche de carénage comprend une couche composite de fibres qui est moulée sur le corps de roue, de préférence une couche composite de fibres surmoulée.

3. Roue en fibres de carbone selon la revendication 1, dans laquelle la couche de carénage comprend une couche composite de fibres moulée qui est collée au corps de roue, de préférence collée au corps de roue à l'aide d'un adhésif.

4. Roue en fibres de carbone selon une quelconque revendication précédente, dans laquelle au moins la seconde résine présente une couleur durcie esthétiquement acceptable comprenant au moins une caractéristique parmi sensiblement claire, transparente, translucide, vitreuse ou pellucide, ayant de préférence une finition de surface hautement brillante, semi-brillante, mate ou texturée.

5. Roue en fibres de carbone selon une quelconque revendication précédente, dans laquelle la seconde résine comprend une résine résistante aux UV.

6. Roue en fibres de carbone selon une quelconque revendication précédente, dans laquelle la première résine comprend une résine structurelle à performance thermique, de préférence une résine structurelle à haute performance thermique, de préférence sélectionnée parmi les époxys, les bismaléimides, les polyimides, les benzoxazines, les phénoliques, les esters de cyanate, le polyuréthane ou les résines à base de polyester, et de préférence la seconde résine comprend une résine structurelle, de préférence sélectionnée parmi les résines à base d'époxy, de polyuréthane, de polyester, de vinylester.

7. Roue en fibres de carbone selon une quelconque revendication précédente, dans laquelle l'empilement de fibres sélectionné est formé à partir d'au moins une fibre sélectionnée parmi la fibre de carbone, la fibre d'aramide, la fibre para-aramide, la fibre de verre, la fibre de polyester ou les fibres de verre aluminisées.

8. Roue en fibres de carbone selon une quelconque revendication précédente, dans laquelle la couche de carénage est fixée à au moins l'une parmi : la partie face du côté externe du corps de roue ; ou au moins une portion de la partie jante du côté externe du corps de roue.

9. Procédé de formation d'une roue (100) en fibres de carbone, comprenant :
la formation d'un corps (150) de roue moulé à partir d'une première composition composite de fibres de carbone comprenant un premier empilement de fibres de carbone imprégné d'une première résine, le corps de roue moulé comprenant une partie jante (102) et une partie face (104),
la partie de jante comprenant une structure annulaire configurée pour recevoir et supporter un pneu, la partie de la partie jante comprenant une structure annulaire configurée pour recevoir et supporter un pneu, la incluant un moyeu (106) configuré pour fixer la roue au véhicule, et une structure de liaison qui s'étend entre le moyeu et la jante et les relie entre eux, le corps de roue présentant un côté interne configuré pour être tourné vers un support de roue d'un véhicule, et un côté externe configuré pour être tourné vers l'extérieur lorsqu'il est relié à un support de roue d'un véhicule ;
la formation d'une couche de carénage (200) sur le côté externe du corps de roue moulé à partir d'une seconde composition composite de fibres comprenant un empilement de fibres sélectionné imprégné d'une seconde résine, l'empilement de fibres sélectionné comprenant au moins une couche de fibres recouvrant au moins une partie de la partie face du côté externe du corps de roue moulé, l'empilement de fibres sélectionné présentant une configuration coopérante avec le côté externe du corps de roue,
**caractérisée en ce que** la première résine présente une composition différente de la seconde résine.

10. Procédé selon la revendication 9, dans lequel la couche de carénage est formée sur le côté externe du corps de roue moulé en surmoulant la seconde composition composite de fibres sur au moins une partie de la partie face du côté externe du corps de roue moulé, de préférence en utilisant un procédé de moulage par transfert de résine (RTM).

11. Procédé selon la revendication 9 ou revendication 10, dans lequel la couche de carénage est formée sur la partie face et au moins une portion de la partie jante du côté externe du corps de roue.

12. Procédé selon la revendication 9, dans lequel la couche de carénage comprend un corps moulé de forme coopérative ayant une configuration coopérante avec le côté externe du corps de roue, la couche de carénage étant fixée sur la partie face et au moins une partie de la partie jante du côté externe du corps de roue moulé à l'aide d'un adhésif.

13. Procédé selon l'une quelconque des revendications 9 à 12, dans lequel la seconde résine présente une couleur durcie esthétiquement acceptable comprenant au moins une caractéristique parmi sensiblement claire, transparente, translucide, vitreuse ou pellucide, ayant de préférence une finition de surface hautement brillante, semi-brillante, mate ou texturée.

14. Procédé selon l'une quelconque des revendications 9 à 13, dans lequel la première résine comprend une résine structurelle à performance thermique, de préférence une résine structurelle à haute performance thermique, de préférence sélectionnée parmi au moins l'un parmi les époxys, les bismaléimides, les polyimides, les benzoxazines, les phénoliques, les esters de cyanate, le polyuréthane ou les résines à base de polyester, et de préférence la seconde résine comprend une résine structurelle, de préférence sélectionnée parmi au moins l'une parmi les résines à base d'époxy, de polyuréthane, de polyester, de vinylester.

15. Procédé selon l'une quelconque des revendications 9 à 14, dans lequel l'empilement de fibres sélectionné est formé à partir d'au moins une fibre sélectionnée parmi la fibre de carbone, la fibre d'aramide, la fibre para-aramide, la fibre de verre, la fibre de polyester ou les fibres de verre aluminisées.
